(19) Europäisches Patentamt
European Patent Office
Office européen des brevets

(11) EP 0 985 681 B1

(12) # FASCICULE DE BREVET EUROPEEN

(45) Date de publication et mention de la délivrance du brevet:
**09.11.2005 Bulletin 2005/45**

(51) Int Cl.[7]: **C08B 15/00**, C07B 57/00, C08B 15/05

(21) Numéro de dépôt: **99402203.6**

(22) Date de dépôt: **07.09.1999**

(54) **Dérivés chloro-, hydroxy-, et alkoxysilanes de polysaccharides ou d'oligosaccharides, polymérisables et réticulables, leur synthèse et leur utilisation comme sources de nouveaux matériaux supports**

Polymerisierbare und vernetzbare Chlor-, Hydroxyl- und Alkoxysilanderivate von Polysacchariden oder Oligosacchariden, ihre Herstellung und Verwendung als Trägermaterialien

Chloro-, hydroxy- and alcoxysilanes derivatives of polysaccharides or oligosaccharides, polymerizables and crosslinkables, process for their preparation and their use as substrate materials

(84) Etats contractants désignés:
**AT BE CH CY DE DK ES FI FR GB GR IE IT LI LU MC NL PT SE**

(30) Priorité: **11.09.1998 FR 9811377**

(43) Date de publication de la demande:
**15.03.2000 Bulletin 2000/11**

(73) Titulaire: **Eka Chemicals AB**
**445 80 Bohus (SE)**

(72) Inventeur: **Duval, Raphael**
**76330 Notre Dame de Gravenchon (FR)**

(74) Mandataire: **Touati, Catherine et al**
**Cabinet Plasseraud**
**65/67 rue de la Victoire**
**75440 Paris Cedex 09 (FR)**

(56) Documents cités:
**EP-A- 0 401 668**
**US-A- 4 781 858**
**US-A- 4 973 680**

- **PATENT ABSTRACTS OF JAPAN vol. 18, no. 46 (C-1157), 25 janvier 1994 (1994-01-25) & JP 05 271307 A (TOPPAN PRINTING CO LTD), 19 octobre 1993 (1993-10-19) & DATABASE WPI Week 9346 Derwent Publications Ltd., London, GB; AN 365255**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 985 681 B1

Printed by Jouve, 75001 PARIS (FR)

## Description

L'invention concerne des dérivés chloro-, hydroxy- et alkoxysilanes de polysaccharides ou d'oligosaccharides en tant que nouveaux composés polymérisables et réticulables, ainsi que leur mode d'obtention.

L'invention concerne également de nouveaux matériaux supports obtenus à partir desdits dérivés et comportant lesdits dérivés silanes de polysaccharides ou d'oligosaccharides greffés chimiquement par un lien covalent avec le support et polymérisés et réticulés en un réseau tridimensionnel. L'invention concerne également le mode d'obtention desdits matériaux supports.

L'invention concerne également l'utilisation desdits matériaux supports en séparation ou en préparation d'énantiomères, par mise en oeuvre dans des procédés de chromatographie gazeuse, liquide, supercritique, par électrophorèse, d'électrochromatographie ou par percolation au travers de membranes contenant lesdits matériaux supports.

La séparation d'énantiomères est un domaine en expansion depuis une vingtaine d'années, tant au niveau préparatif qu'au niveau analytique. Ceci est vrai en particulier pour l'utilisation en pharmacie, où la législation impose l'étude séparée des isomères optiques de tout composé entrant dans la composition d'un médicament. Les polysaccharides substitués ont fait l'objet de nombreuses études, et des celluloses déposées physiquement sur support de gel de silice sont commercialisées. De tels composés présentent cependant le désavantage d'être le plus souvent solubles dans les solvants polaires organiques, ce qui limite singulièrement leur utilisation.

Des solutions récentes ont été apportées au problème de la solubilisation, par l'établissement de liaisons covalentes entre le polysaccharide substitué et le support. Kimata et al. ont exposé leurs résultats (Analytical Methods and Instrumentation, vol.1, 23-29 (1993)) sur une phase stationnaire chirale à base de cellulose-tris-2,3,6-(4-vinyl benzoate) déposée sur gel de silice puis polymérisée sur le support.

Les données chromatographiques obtenues avec deux mélanges racémiques tests, sont les suivantes :

| | Support déposé | | Support déposé et polymérisé | |
|---|---|---|---|---|
| | Oxyde de stilbène | 1-(1-naphtyl éthanol) | Oxyde de stilbène | 1-(1-naphtyl éthanol) |
| k'1 | 1,08 | 2,15 | 1,04 | 1,47 |
| k'2 | 1,66 | 2,84 | 1,44 | 1,80 |
| $\alpha$ | 1,54 | 1,32 | 1,39 | 1,22 |
| $R_s$ | 3,63 | 2,34 | 3,82 | 1,44 |

où

- k'1 et k'2 sont les facteurs de capacité, c'est-à-dire que, si i = 1 ou 2, $k'_1 = (t_{Ri} - t_0) / t_0$, $t_{Ri}$ étant le temps de rétention du composé i et $t_0$ le temps mort ;
- $\alpha$ est le facteur de sélectivité : $\alpha = (t_{R2} - t_0) / (t_{R1} - t_0) = k'2 / k'1$
- $R_S$ est le facteur de résolution :

$$R_s = \frac{1}{4}\left(\frac{(\alpha-1)}{(\alpha)}\right)\left(\frac{(k'2)}{(1+k'2)}\right)(N)^{1/2}$$

N étant le nombre de plateaux déterminé d'après les grandeurs chromatographiques mesurées sur chromatogramme.

On peut observer, entre le support déposé et le support déposé et polymérisé, une baisse systématique des facteurs de sélectivité obtenus : moins 10% sur le transstilbène oxyde ($\alpha$ varie de 1,54 à 1,39) et moins 7,5 % pour le 1-(1-naphtyl) éthanol ($\alpha$ varie de 1,32 à 1,22).

Ce phénomène pourrait s'expliquer par une solubilité partielle du support polymérisé du fait d'une polymérisation incomplète due à une réactivité faible du groupement vinyl benzoate dans les conditions réactionnelles mises

en oeuvre.

D'autre part, Kimata et al. ne présentent aucun exemple de séparation dans un solvant polaire pur (brevet ou publication).

Okamoto et al. ont décrit (EP-B-0 155 637) les polymères liés chimiquement à du gel de silice. Ils décrivent en particulier le greffage de cellulose tris-2,3,6-phénylcarbamate sur du gel de silice via un intermédiaire tritylé, puis la réalisation de la liaison covalente, entre le gel de silice et le carbamate de polysaccharide partiellement dérivé, par l'action d'un diisocyanate.

Les résultats des analyses élémentaires effectuées lors des différentes étapes de synthèse sont les suivants (EP-B-0 155 637, page 8 à page 9, ligne 33).

| | | C % | H % | N % |
|---|---|---|---|---|
| 1. | Trityl cellulose déposée sur silice | 15,40 | 1,23 | 0,09 |
| 2. | Cellulose détritylée déposée sur silice | 3,61 | 0,60 | - |
| 3. | Cellulose liée à la silice par toluène 2,4 diisocyanate | - | - | - |
| 4. | Cellulose phényl carbamate liée à la silice et lavée THF/chloroforme | 3,23 | 0,27 | 0,45 |

La perte en taux de greffage entre la cellulose déposée sur silice (2) et le phénylcarbamate de cellulose lié à la silice (4) est importante sachant que le taux de (4) calculé d'après (2) est de l'ordre de 14 % en carbone. On peut donc estimer la perte en motifs hydrocarbonés à 80 % depuis la réalisation de la liaison covalente, entre le cellulose et la silice, par le bras diisocyanate suivi de la dérivation des OH avec l'isocyanate de phényle et le lavage final au chloroforme. Aucun exemple de séparation dans les solvants polaires n'est donné pour le support obtenu.

Okamoto et al. ont décrit (JP-A-06-206 893) un oligosaccharide lié chimiquement à du gel de silice par l'intermédiaire d'une fonction imine réduite en amine. L'amylose est ensuite régénéré par voie chimioenzymatique à partir de cet oligosaccharide. Les fonctions hydroxyles disponibles sont ensuite dérivées en fonctions carbamates. Aucun exemple de séparation dans un solvant polaire pur n'est donné.

D'autre part, il est intéressant de travailler en surcharge importante de colonne pour des applications préparatives. La possibilité d'utiliser 100 % du matériau chiral sous forme de billes de polymère pur de polysaccharides substitués, au lieu de les déposer physiquement sur support, s'est révélée efficace pour augmenter les rendements massiques des processus de chromatographie chirale préparative. Ainsi les brevets EP-B-348 352, et EP-B-316 270 et WO-A-96/27 639 concernent la réalisation de billes de cellulose pour la séparation d'isomères optiques.

Toutefois, les billes de polymères purs sont solubles dans les solvants polaires comme les solvants halogénés - le tétrahydrofurane, le dioxane, etc. Il est donc impossible d'utiliser ces solvants purs ou des mélanges avec de fortes proportions de ces derniers, pour réaliser des séparations d'isomères.

Afin de pallier cet inconvénient, Francotte et al. ont décrit la polymérisation par rayonnement de polysaccharides dérivés (WO-A-96/27 615).

Toutefois, le taux de polymérisation semble difficile à maîtriser dans un tel procédé, la réticulation par procédé photochimique intervenant préférentiellement en surface de la bille de polymères, les rayonnements ne pouvant pénétrer à l'intérieur de la bille. Aucun exemple de séparation n'est donné dans un polymère pur.

Francotte et al. ont également décrit dans la demande internationale WO-A-97/04 011 la réticulation chimique de carbamates et d'esters de polysaccharides ne comportant pas de groupe polymérisable. La réticulation a lieu selon l'auteur en présence d'initiateur de polymérisation radicalaire. Le mécanisme réactionnel et la structure des produits obtenus ne sont pas décrits. Aucun exemple de séparation dans un solvant polaire pur n'est donné.

Lange et al. ont décrit (US-A-5 274 167) la polymérisation de dérivés d'acide méthacrylique optiquement actifs, la structure du support n'étant pas explicitée. Aucun exemple de séparation dans un solvant polaire pur.

Minguillon et al. ont décrit la synthèse de cabarmates de cellulose partiellement dérivés avec un chlorure d'undécénoyle. Toutefois, la structure du support n'est pas explicitée (J. of Chromatog. A 728 (1996), 407 - 414 et 415-422).

Oliveros et al. (WO-A-95/18 833) décrivent des dérivés de polysaccharides comportant un radical éthylénique et déposés sur un support de gel de silice comportant des groupements vinyle puis polymérisés. Aucun exemple de séparation n'est donné avec un solvant polaire pur.

Le document JP-A-05271307 divulgue une méthode de fixation de cyclodextrine sur un matériau inorganique tel qu'un gel de silice, cette méthode mettant en oeuvre la réaction d'un dérivé d'acide allyloxycarboxylique, d'un allyloxyalcool, d'un méthacrylate d'alkyldialkoxyméthylsilane ou d'un 3-amino alkyldialkoxyméthylsilane avec une cyclodextrine ou un dérivé de cyclodextrine, puis la réaction du produit obtenu avec un gel de silice.

La présente invention concerne la préparation de nouveaux dérivés silanes de polysaccharides et d'oligosaccharides comportant des fonctions chlorosilanes, hydroxysilanes ou alkoxysilanes aisément polymérisables et réticulables dans un réseau tridimensionnel. Lesdits dérivés sont utilisés pour l'obtention de nouveaux matériaux supports les contenant et caractérisés en ce qu'ils sont liés par liaison chimique covalente au support et concomitamment polymérisés et réticulés dans un réseau tridimensionnel. Lesdits matériaux supports sont utiles pour la séparation d'énantiomères par chromatographie, en particulier dans les solvants polaires purs comme le chloroforme, le dichlorométhane, le tétrahydrofurane, l'acétone, le toluène, l'acétate d'éthyle ou tout autre solvant polaire organique.

L'invention concerne également une méthode d'obtention de dérivés silanes de polysaccharides comportant des groupements chlorosilane, hydroxysilane ou alkoxysilane. L'obtention subséquente de matériaux supports est réalisée par dépôt physique desdits dérivés silanes de polysaccharides obtenus, sur un support et la mise en réaction des fonctions chlorosilane, hydroxysilane ou alkoxysilane avec ledit support pour la réalisation de liaisons chimiques covalentes de type -Si-O-(support) avec une polymérisation et une réticulation tridimensionnelle concomitante du dérivé silane de polysaccharide par création de liaisons chimiques covalentes de type -Si-O-Si- entre les chaînes du dérivé de polysaccharide. La méthode comprend également la séparation et la préparation d'énantiomères par mise en oeuvre desdits matériaux supports dans des procédés de chromatographie en phase liquide, gazeuse ou supercritique, en synthèse organique ou dans des procédés de percolation au travers de membranes contenant lesdits matériaux supports.

Les matériaux supports selon l'invention possèdent une stabilité et une insolubilité totale dans les solvants polaires tels que le tétrahydrofurane, le chloroforme, le dichlorométhane, l'acétonitrile, le toluène ou l'acétate d'éthyle, ainsi que dans tout autre solvant organique comme les éthers par exemple. La stabilité et l'insolubilité desdits matériaux supports est effective jusqu'à haute température (supérieure à 100 °C).

Les dérivés chlorosilanes, hydroxysilanes et alkoxysilanes de polysaccharides selon l'invention sont constitués d'enchaînements d'unités osidiques chirales formant des chaînes linéaires, ramifiées ou cycliques et qui peuvent être représentés par l'une des formules générales ci-dessous :

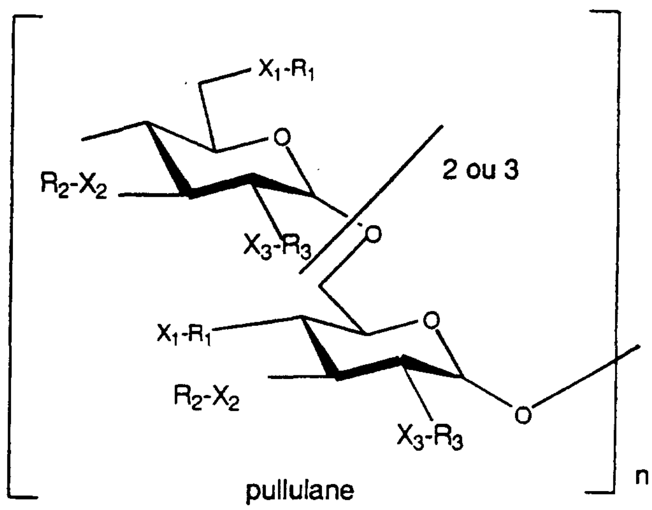

pullulane

Ia

Ib

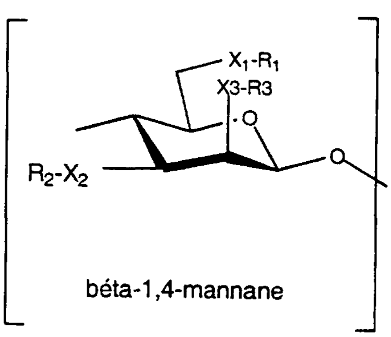

béta-1,4-mannane

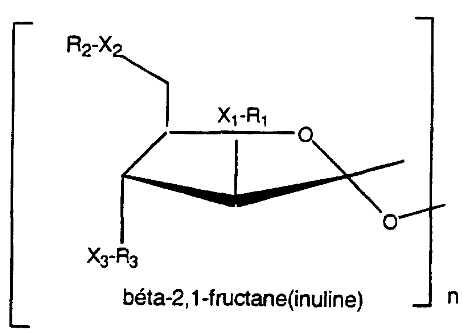

béta-2,1-fructane(inuline)

Ic

Id 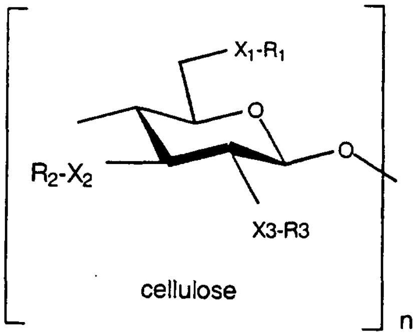

cellulose

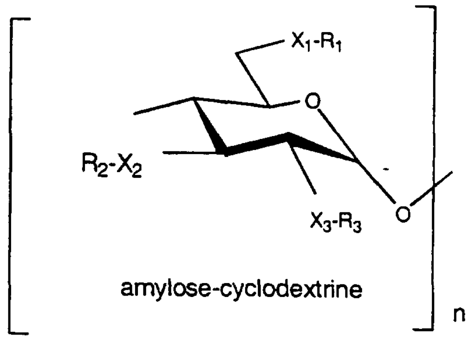 Ie

amylose-cyclodextrine

If 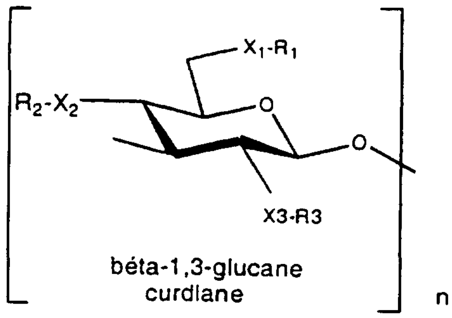

béta-1,3-glucane curdlane

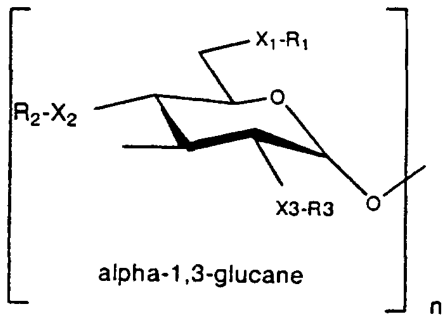 Ig

alpha-1,3-glucane

Ih 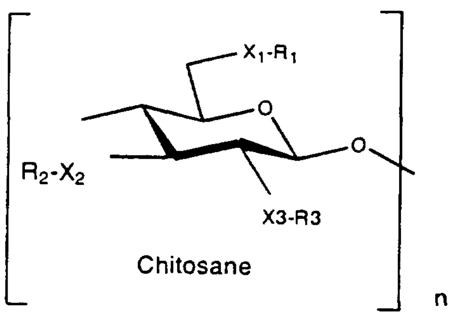

Chitosane

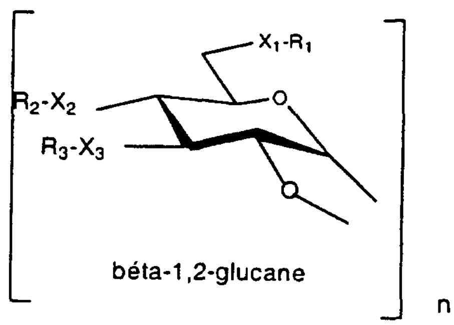 Ii

béta-1,2-glucane

Ij 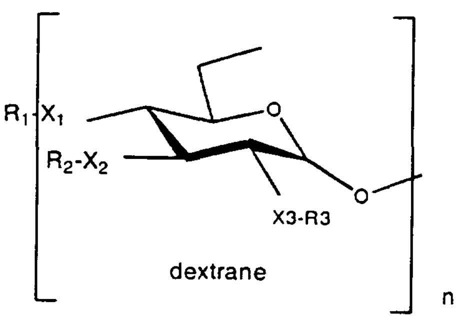

dextrane

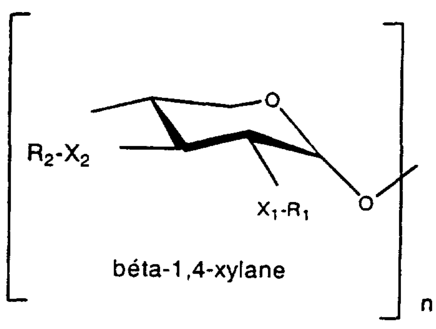 Ik

béta-1,4-xylane

dans lesquelles :

a) les symboles $X_1$, $X_2$ et $X_3$, identiques ou différents, représentent chacun un atome d'oxygène ou le groupement -NH ;
b) chacun des symboles $R_1$, $R_2$ et $R_3$ représentent indépendamment :

- un radical chlorosilane, hydroxysilane ou alkoxysilane de formule générale $[(X)_3Si\text{-}W\text{-}CH_2\text{-}CH_2]_mA\text{-}Y\text{-}$ (II) dans laquelle m est un nombre entier non nul au plus égal à 5, Y représente une simple liaison, un groupement -NH-CO-, un groupement -NH-CS- ou un groupement -CO-, A représente une simple liaison, un radical alkylène, linéaire ou ramifié, ayant de 1 à 21 atomes de carbone, un radical arylène ayant de 6 à 18 atomes de carbone ou un radical aralkylène ayant de 7 à 40 atomes de carbone, W représente une simple liaison ou le groupement $-CH_2\text{-}CH_2\text{-}CH_2\text{-}S-$ et X représente un halogène, un hydroxyle ou un alkoxy ;
- ou un radical ayant la formule $A_2\text{-}A_1\text{-}CX_4\text{-}$ (III) dans laquelle $X_4$ représente un atome d'oxygène ou de soufre, $A_1$ représente une simple liaison ou un groupement -NH- et $A_2$ représente un radical aryle ayant de 6 à 24 atomes de carbone, un radical aralkyle ayant de 7 à 36 atomes de carbone ou un radical alkylaryle ayant de 7 à 18 atomes de carbone ;
- ou un atome d'hydrogène ou un groupe $NO_2$;

n étant un nombre entier compris entre 5 et 20 000,
étant entendu que dans chaque unité chirale osidique (Ia) à (Ik), l'un au moins des symboles $X_1$, $X_2$ et $X_3$ représente un atome d'oxygène, et que, dans au moins une partie des unités osidiques constituant le dérivé de polysaccharide, l'un au moins des symboles $R_1$, $R_2$ ou $R_3$ représente un radical de formule générale (II) et l'un au moins des symboles $R_1$, $R_2$ ou $R_3$ représente un radical de formule générale (III).

Les radicaux arylènes ou aryles contenus respectivement dans les radicaux de formule générale (II) et (III) peuvent être éventuellement substitués par un ou plusieurs atomes ou radicaux, identiques ou différents, choisis parmi les atomes d'halogène, les radicaux alkyles contenant de 1 à 4 atomes de carbone, les radicaux alkoxy contenant de 1 à 4 atomes de carbone et les groupes nitro. Les radicaux arylènes contenus dans les radicaux de formule générale (II) sont, de préférence, des radicaux phénylènes ou des radicaux naphtylènes, éventuellement substitués par un ou plusieurs atomes ou radicaux, identiques ou différents, choisis parmi les atomes d'halogène et les radicaux alkyles contenant de 1 à 4 atomes de carbone, les radicaux alkyloxy contenant de 1 à 4 atomes de carbone et les groupes nitro. Les radicaux aryles contenus dans les radicaux de formules générale (III) sont, de préférence, des radicaux phényles ou des radicaux naphtyles, éventuellement substitués par un ou plusieurs atomes ou radicaux, identiques ou différents, choisis parmi les atomes d'halogène, les radicaux alkyles contenant de 1 à 4 atomes de carbone, les radicaux alkyloxy contenant de 1 à 4 atomes de carbone et les groupes nitro.

Généralement, les dérivés silanes de polysaccharides selon l'invention ont un degré de polymérisation compris entre 5 et 20 000 et de préférence entre 10 et 500.

Généralement, les dérivés silanes de polysaccharides selon l'invention contiennent de 0,05 à 3, de préférence de 0,05 à 2,95, groupes de formule générale (II) par unité structurale de formule générale (Ia) à (Ik), et de 0 à 2,95, de préférence de 0,05 à 2,95, groupes de formule générale (III) par unité structurale de formule générale (Ia) à (Ik).

Généralement, les dérivés de polysaccharides selon l'invention dérivent de l'amylose, de la cellulose, du chitosane, des cyclodextrines α, β ou γ et du dextrane.

Selon l'invention, les dérivés silanes de polysaccharides peuvent être obtenus par une synthèse en deux ou trois étapes, où l'on fait agir successivement sur un polysaccharide :

- dans une étape 1, un composé de formule générale :

$$(CH_2 = CH)_mA - Y_1 \qquad \text{(IV)}$$

  dans laquelle R, m et A sont définis comme précédemment et $Y_1$ représente un atome d'halogène (chlore, brome), un groupe -N=C=O ou -N=C=S ou un groupe -CO-Z dans lequel Z représente un atome d'halogène (chlore, brome), pour introduire un radical éthylénique, subséquemment modifié à l'étape 3 en chlorosilane, hydroxysilane ou alkoxysilane ;
- dans une étape éventuelle 2, un isocyanate ou un isothiocyanate de formule générale :

$$A_2\text{-}A_1\text{-}N{=}C{=}X_5 \qquad \text{(V)}$$

  dans laquelle $A_2$ et $A_1$ sont définis comme précédemment et $X_5$ représente un atome d'oxygène ou de soufre ou un composé de formule générale :

$$A_2\text{-}A_1\text{-}CO\text{-}Z_1 \qquad \text{(VI)}$$

dans laquelle $A_2$ et $A_1$ sont définis comme précédemment, et $Z_1$ représente un atome d'halogène (chlore, brome), pour introduire un radical de formule générale (III);

- et, dans une étape 3, un composé de formule générale :

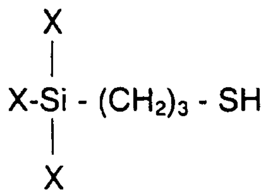

(VII)

ou

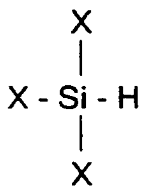

(VIII)

dans lesquelles X est défini comme précédemment, pour introduire un composé de formule générale (II).

Selon l'invention, l'introduction des radicaux de formule générale (II) et éventuellement (III) s'effectue dans les conditions habituellement utilisées pour préparer un éther, un ester, un amide, un carbamate, un thiocarbamate, une urée ou une thiourée à partir de l'alcool ou de l'amine correspondant.

L'étape 1 et l'étape 2 sont en général mises en oeuvre dans un solvant organique à haut point d'ébullition, comme le toluène, en présence d'une base organique comme la pyridine ou la triéthylamine. Dans le cas où le composé de formule (IV) ou (V) est un isocyanate, il est généralement préférable d'utiliser un catalyseur pour favoriser la cinétique de la réaction, le dilaurate de dibutylétain étant préféré.

L'obtention des radicaux de formule générale (II) dans l'étape 3 nécessite la mise en réaction des composés de formules (VII) et (VIII) sur les doubles liaisons éthyléniques des polysaccharides modifiés dans l'étape 1 par les composés de formule générale (IV).

Pour l'étape 3, il y a lieu de faire une distinction dans la procédure de mise en oeuvre, selon qu'il s'agit de faire réagir un composé de formule (VII) ou (VIII).

Dans le premier cas on fait réagir un composé de formule (VII).

La réaction d'addition anti-Markovnikov de fonctions thiols sur des doubles liaisons éthyléniques, en présence d'initiateur de radicaux libres, qui conduit à la formation de liaisons thioéthers, est connue per se. Par exemple, Rosini et coll. ont décrit l'immobilisation d'alcaloïdes de quinquina via une liaison thioéther dans Tetrahedron Lett. 26, 3361-3364, 1985. Plus récemment, Tambute et coll. ont décrit l'immobilisation de dérivés de tyrosine selon la même technique dans New J. Chem. 13 625-637, 1989. Plus récemment encore, Caude et coll. ont exposé les résultats de leurs travaux et ont montré l'avantage d'un lien covalent thioéther en terme de stabilité chimique dans J. Chromatogr. 550, 357-382,1991.
Parmi les composés de formule (VII) le produit généralement préféré est le composé de formule :

$$(CH_3O)_3\ Si - CH_2 - CH_2 - CH_2 - SH$$

ou γ-mercaptopropyltriméthoxysilane, commercialement disponible.
Ce composé est mis en jeu en présence de composés obtenus après réalisation des étapes 1 et 2 ou de l'étape 1, dans un solvant organique, les solvants organiques préférés étant le toluène, le tétrahydrofurane et le chloroforme. Un initiateur de radicaux libres est additionné au milieu réactionnel, comme le peroxyde de benzoyle par exemple.

Dans le second cas on fait réagir dans l'étape 3 un composé de formule (VIII).
L'hydrosilylation de doubles liaisons éthyléniques par des hydrogénosilanes est connue per se et utilisée pour la création de liaisons silicium-carbone. Par exemple, Stuurman, H.W., dans Chromatographia, Vol. 25, n°4, April 1988, pp 265 à 271, a décrit la séparation d'énantiomères par utilisation d'une phase stationnaire a base de quinine hydrosilylée liée à du gel de silice par liaison covalente.

Parmi les composés de formule (VIII) les deux produits généralement préférés sont les composés de formules $(C_2H_5O)_3$ SiH (triéthoxysilane) et $Cl_3$ SiH (trichlorosilane), qui sont commercialement disponibles.
Le triéthoxysilane ou le trichlorosilane est mis en oeuvre en présence des composés obtenus après réalisation des étapes 1 et 2, ou de l'étape 1, dans un solvant organique, les solvants préférés étant le toluène, le dioxane ou le chloroforme. Un complexe métallique est généralement utilisé comme catalyseur. Les complexes métalliques préférés sont à base de rhodium ou de platine, comme l'acide hexachloroplatinique.

L'invention concerne également des matériaux supports contenant les dérivés silanes de polysaccharides de formules générales (Ia) à (Ik) et dont les chlorosilanes, hydroxysilanes et alkoxysilanes contenus dans les radicaux de formule (II) ont été mis en réaction avec un support pour obtenir des composés de formule générale (IXa) ou (IXb) ou (XII) ci-après et concomitamment mis en réaction avec eux-mêmes pour créer des liaisons covalentes contenues dans les formules (IXc), (IXd), (XIII) ou (XIV), ci-après.

La mise en oeuvre simultanée d'une réaction des dérivés silanes de polysaccharides avec un support et entre eux permet de créer un réseau tridimensionnel de dérivés silanes de polysaccharides liés de façon covalente à un support.

La difficulté de représenter un matériau support selon l'invention est évidente. La formule (IX) ci-après représente l'une des variantes possibles des ensembles de formules (IXa), (IXb), (IXc), (IXd), (XII) (XIII) et (XIV), lorsque m est égal à 1, m étant le symbole défini dans la formule (II).

Les réactions mises en jeu sont les suivantes :

- réaction avec support de chlorosilanes, hydroxysilanes et alkoxysilanes pour création de liaisons ≡ Si-O-(support) ;
- création de liaisons siloxanes ≡ Si - O - Si ≡ ou disiloxanes

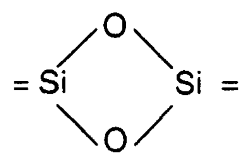

par mise en réaction de dérivés silanes entre eux.

La réaction de chlorosilanes, hydroxysilanes et alkoxysilanes avec un support est connue per se et a été décrite par exemple dans l'ouvrage "Chromatographies en phases liquide et supercritique" de R. Rosset, M. Caude et A. Jardy, 1991, Masson S.A.

Soit par exemple un support de formule générale (XI) schématisé ci dessous :

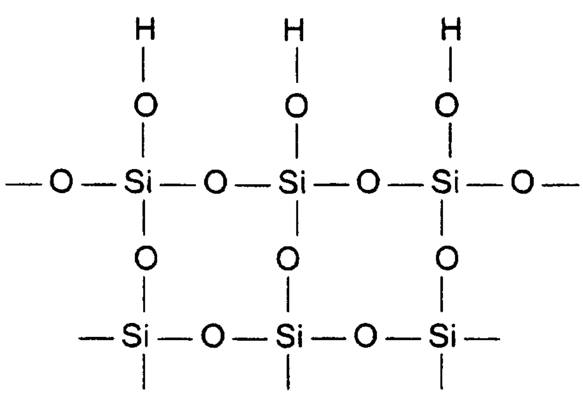

← Surface du support
(XI)

et où les formules ci-dessous schématisent la partie réactive du support

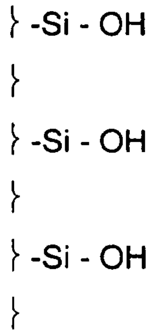

et

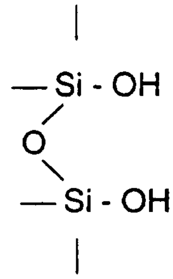

Exemple de support de formule (XI)

et un composé comportant un radical de formule générale (II) et pouvant, également pour simplifier la présentation des schémas réactionnels, être symbolisé par un radical de formule générale :

$$(X)_3\ Si - R - \qquad (XIa)$$

où R représente le radical :

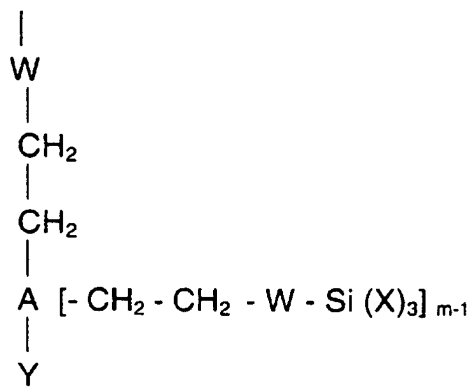

(XIb)

La mise en oeuvre du support et des composés $(X)_3$ Si - R - conduit à la succession des réactions suivantes :

a) Cas où X = -OH ou alkoxy

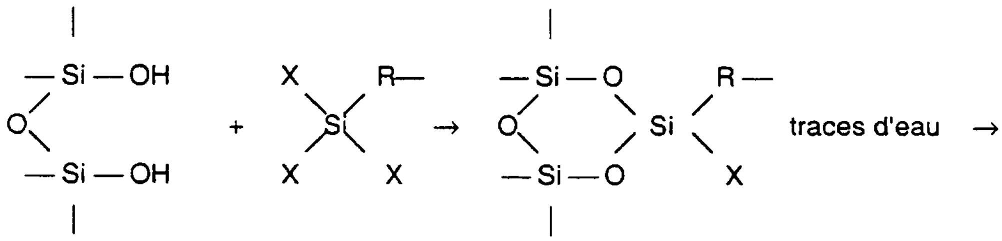


(XII)

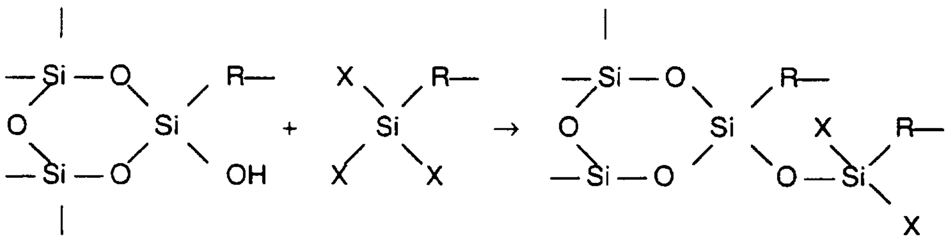

(IXaa)

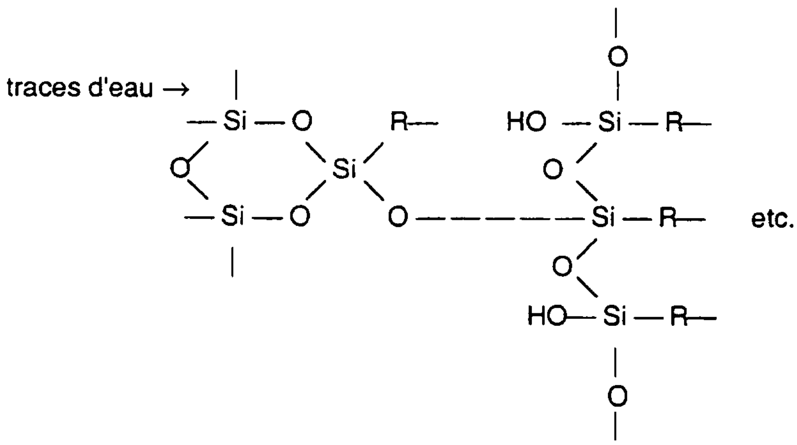


(IXa)

b) Cas où X = chlore

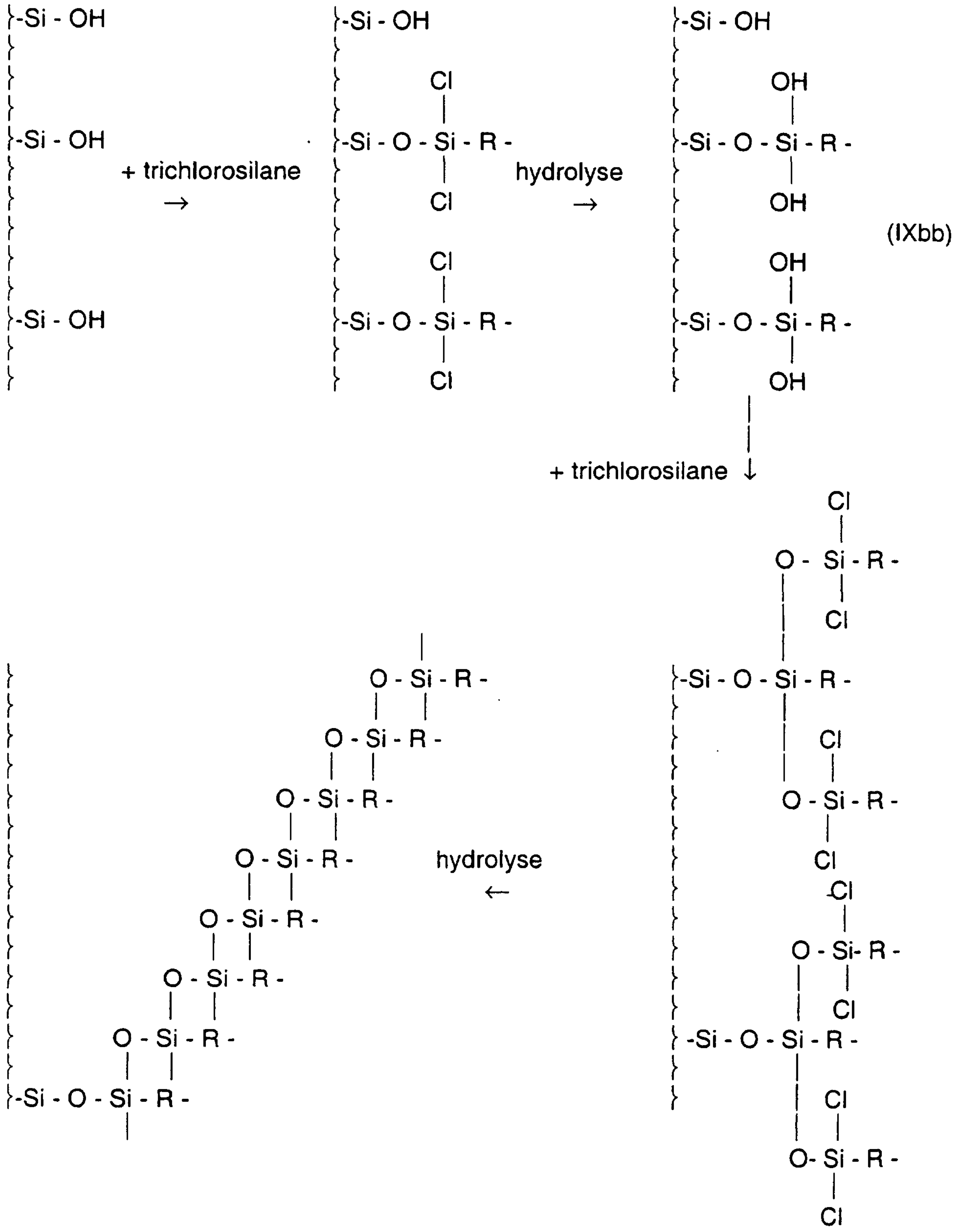


(IXbb)

(IXb)

Le symbole

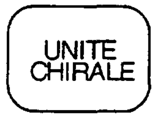


des formules (IX), (IXc) et (IXd) et représente un composé de formule (Ia) à (Ik) et schématise une unité osidique chirale d'un enchaînement osidique de dérivé silane de polysaccharide.

Les matériaux supports sont de structure complexe car tridimensionnels. Ils peuvent être représentés par l'ensemble des formules générales (IXaa), (IXa), (IXbb), (IXb), (IXc), (IXd), (XII), (XIII) et (XIV).

Les composés de formule générale (IX) représentent l'une des combinaisons possibles :

- réaction avec le support conduisant aux composés des formules (XII) lorsque m = 1 ;
- et réaction concomitante conduisant aux composés de formule (XIII) lorsque m = 1, soit la formule (IXc),

m ayant la même signification que dans la formule (II).

Il y a en réalité déjà un nombre important de combinaisons possibles pour les composés de formule générale (IX).

La mise en oeuvre des chlorosilanes, hydroxysilanes et alkoxysilanes de polysaccharides sur des supports conduit à des composés de formule générale (IXaa), (IXa), (IXbb), (IXb) et (XII).

Les supports utilisés peuvent être du gel de silice, de l'alumine, de la zircone, de l'oxyde de titane ou de l'oxyde de magnésium.

Concomitamment aux réactions précédemment décrites et aboutissant à la formation des composés de formule générale (IXaa), (IXa), (IXbb), (IXb) et (XII), se produit une réaction de réticulation entre les chaînes de dérivés silanes de polysaccharides de formules (Ia) à (Ik). En effet, cette réaction a lieu simultanément car les fonctions chimiques mises en jeu, chlorosilanes, hydroxysilanes et alkoxysilanes, sont strictement identiques à celles précédemment mise en jeu avec le support.

Il se produit en fait une réticulation interchaîne au sein du dérivé silane de polysaccharide conduisant à la formation d'un réseau tridimensionnel par création de liaisons :

$\equiv Si - O - Si \equiv$ ou

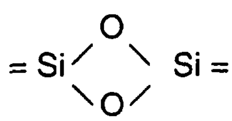

Le principe de la réticulation par réaction de silanes contenus sur deux chaînes différentes du dérivé silane de polysaccharide est schématisé dans la réaction ci-dessous :

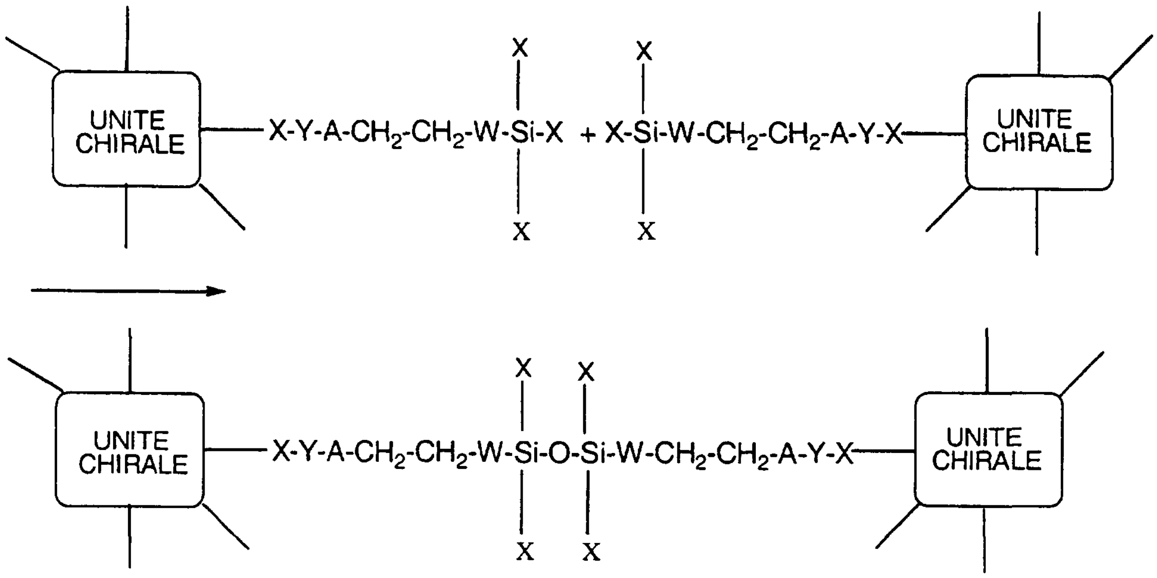

ou

(IXc)

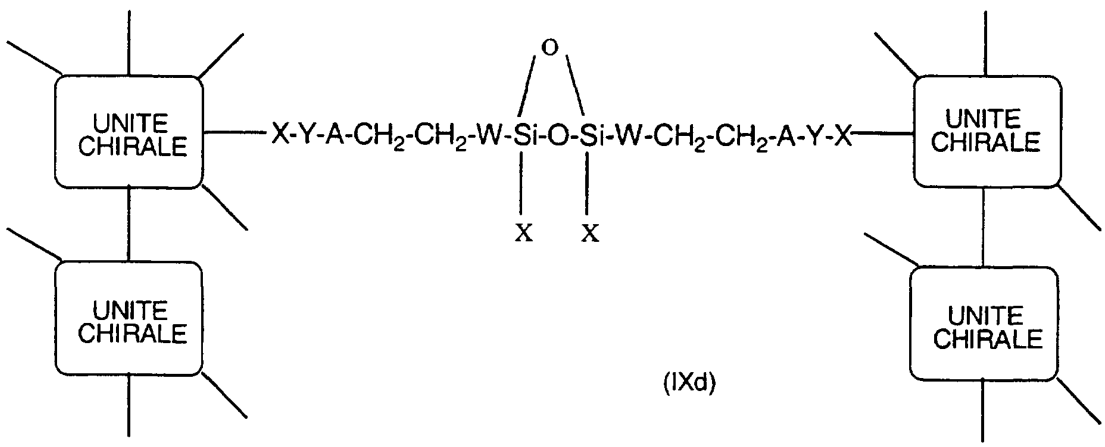

(IXd)

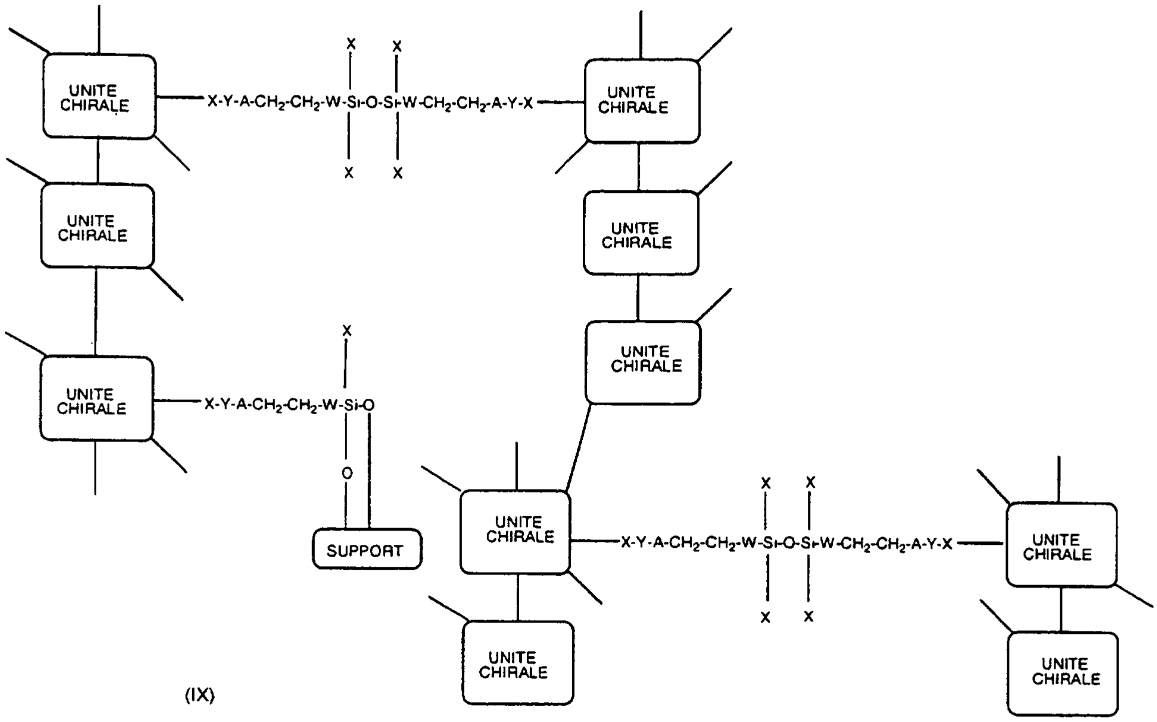

(IX)

où "support" représente un composé de formule générale :

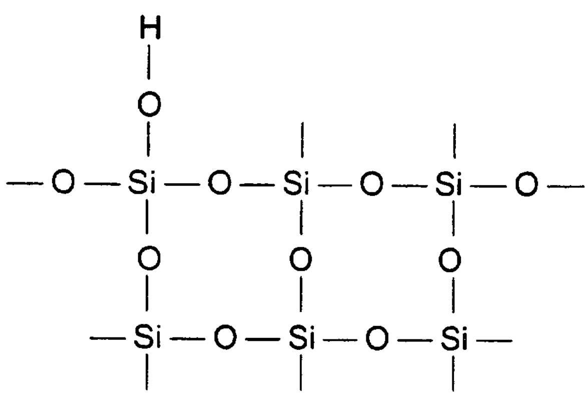

⇐ Surface du support (X)

avec Si représentant l'atome de silicium ou de titane ou de zirconium ou d'aluminium ou de magnésium ;

- où W, A, Y et X sont tels que définis précédemment dans les formules (Ia) à (Ik) ;
- et où "unité chirale" représente un composé de formule (Ia) à (Ik).

L'invention concerne également une méthode d'obtention de matériaux support qui comprend :

- un dépôt physique d'un dérivé silane de polysaccharide de formule générale (Ia) à (Ik) sur un support de formule générale :

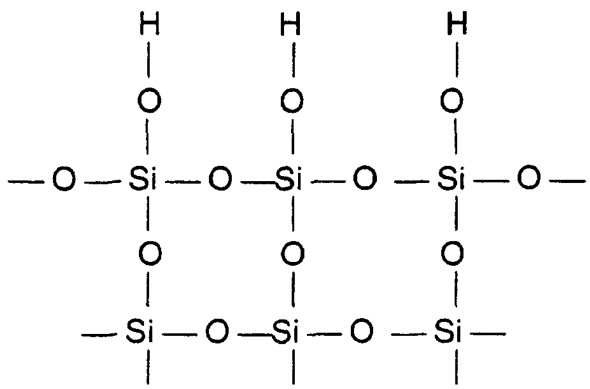

⇐ Surface du support (XI)

où Si a la même signification que dans la formule (X) ;

- et la mise en réaction des silanes représentés dans le radical de la formule (II) selon deux modes principaux de réaction (a) et (b) :

  a) réaction avec un support de formule (X) pour conduire aux composés de formule générale (IXaa), (IXa), (IXbb), (IXb), (XII) et (IX) ;
  b) réticulation desdits silanes entre eux pour conduire aux composés de formule générale (IXc), (IXd), (XIII) et (XIV).

La formule (IXc) correspond à la formule (XIII) pour m = 1
La formule (IXd) correspond à la formule (XIV) pour m = 1, m ayant la même signification que dans la formule (II).

Les deux modes de réactions (a) et (b) sont menés simultanément et permettent de lier le dérivé silane de polysaccharide par un lien covalent sur le support et de polymériser et de réticuler lesdits dérivés silane de polysaccharides en un réseau tridimensionnel.

De façon surprenante, les matériaux supports obtenus possèdent une stabilité remarquable dans tous les solvants organiques, et plus particulièrement dans les solvants organiques polaires à fort pouvoir dissolvant pour les dérivés benzoate et carbamates de polysaccharides, comme le chloroforme, l'acétone, le tétrahydrofurane, le dioxane, le toluène.

De manière également surprenante, ces matériaux supports sont stables dans les solvants cités précédemment jusqu'à des températures de 80 °C ou davantage. Par exemple un test de sélectivité (a) effectué sur le 2,2,2-trifluoro-1(9-anthryl) éthanol avec un matériau support synthétisé selon l'exemple 1 a réalisé montré que le facteur de sélectivité $\alpha$ ($\alpha$ = 1,54 dans le chloroforme) obtenu selon l'exemple 1 n'est pas affecté par le passage d'environ 1000 volumes morts de colonne des solvants suivants :

| Solvants | Conditions | Solvants | Conditions |
|---|---|---|---|
| Diisopropyléther | de 20 à 80 °C | Propionitrile | 40 °C |
| Diéthyléther | 60 °C | Benzène | 80 °C |
| Dibutyléther | 40 °C | Chlorure de butyle | 80 °C |
| Tert-butyl methyléther | 60 °C | Chloroheptane | 80 °C |
| Acétaldéhyde diéthyl acétal | 40 °C | 1,1,1-trichloréthane | 40 °C |
| 1,4-dioxane | 40 °C | Dichloro 1,2-éthane | 40 °C |
| Ethylèneglycol diméthyléther | 40 °C | Trifluoroéthanol | 40 °C |
| 2-méthoxy éthyl éther | 40 °C | Hydroperoxyde de tert-butyle | 40 °C |
| Ethyl butyrate | 40 °C | Acétate de butyle | 40 °C |
| Méthanol | 40 °C | Ethanol | 40 °C |
| Isopropanol | 40 °C | 1-butanol | 40 °C |
| Acétonitrile | 40 °C | | |

Ces propriétés permettent d'envisager la mise en oeuvre des matériaux supports dans des procédés de séparation ou de préparation d'énantiomères utilisant tout type de solvant polaire jusqu'à des températures d'au moins 80°C, ce qui semble particulièrement intéressant pour des applications industrielles.

La stabilité des matériaux supports a également été évaluée par dissolution à reflux dans les différents solvants du tableau précédent. Les résultats montrent de façon surprenante que la perte en masse d'un matériau support synthétisé selon l'exemple 1, est nulle après filtration à chaud et séchage. Ce résultat indique que le dérivé silane de polysaccharide de l'exemple 1 est bien lié au support par liaison covalente et qu'il y a bien eu création de liens -Si-O-Si- entre les chaînes du dérivé silane de polysaccharide, la réticulation obtenue ayant concerné l'ensemble de la structure du dérivé silane de polysaccharide. En effet, les dérivés silanes de polysaccharides de formules (Ia) à (Ik) sont solubles dans les solvants organiques polaires tels que ceux mentionnés dans le tableau précédent, à froid et à chaud. (On utilise d'ailleurs cette propriété pour réaliser le dépôt physique des composés de formule (Ia) à (Ik) sur un support). La perte en masse du matériau support étant nulle, on peut estimer qu'il n'existe plus de composés de structure chimique représentée par les formules (Ia) à (Ik) dans lesdits matériaux support, ce qui indique que la totalité des composés de formule (Ia) à (Ik) a été transformée en matériau support de formule générale (IX).

Le dépôt physique d'un dérivé de polysaccharide de formule générale (Ia) à (Ik) sur un support est réalisé selon deux techniques :

- l'évaporation d'une solution desdits dérivés de polysaccharides à pression ordinaire, ou sous vide, en présence du support; ou
- la précipitation par addition d'un solvant dans lequel lesdits dérivés de polysaccharides sont insolubles, en présence d'un support.

Généralement, lesdits dérivés de polysaccharides sont mis en solution dans des solvants organiques polaires comme le chloroforme, le dichlorométhane, l'acétone, le dioxane, la pyridine, le tétrahydrofurane ou le toluène. A cette solution de dérivés de polysaccharides, on additionne un support de formule générale (XI), de granulométrie 0,1μm à 1 mm et de diamétrie de pore 10 Å 10 000 Å, le support préféré étant du gel de silice.

La quantité de polysaccharide varie de 1 à 70 % en poids par rapport à la masse du support additionné. On obtient une suspension.

Si on opte pour la technique par évaporation, la suspension précédemment obtenue est mise à sec par distillation du solvant à pression ordinaire ou sous vide. On obtient un produit qui est constitué d'un support sur lequel est déposé physiquement un dérivé silane de polysaccharide de formule (Ia) à (Ik). Ce produit est appelé composite.

Si on opte pour la technique par précipitation, on additionne à la suspension obtenue précédemment, un solvant dans lequel le dérivé de polysaccharide est insoluble, l'hexane ou l'heptane étant les solvants préférés. La suspension est filtrée, lavée à l'heptane et séchée à 40 °C sous vide. On obtient un produit de même nature que celui obtenu dans la technique par évaporation. Ce produit est également appelé composite.

Le composite ainsi obtenu est mis en suspension dans un solvant dans lequel le dérivé du polysaccharide est insoluble, les solvants préférés étant l'heptane ou l'hexane, et la suspension est portée à reflux pendant par exemple douze heures. L'apport de calories permet aux chlorosilanes, hydroxysilanes ou alkoxysilanes contenus dans les dérivés silanes de polysaccharides, d'entrer en réaction avec les groupes silanols contenus en surface du support de gel de silice. La réaction de greffage de chlorosilanes, hydroxysilanes ou alkoxysilanes sur des supports de gel de silice contenant des silanols est connue per se et a été décrite dans plusieurs ouvrages comme "Silica Gel and Bonded Phases", R.P.W. Scott, 1993, Separation Sciences Series, R.P.W. Scott et C.F. Simpson éditeurs, par John Wiley & Sons Ltd. L'utilisation de chlorosilanes conduit à la formation d'acide chlorhydrique et il y a lieu de piéger celui-ci par utilisation d'une base comme la pyridine. L'utilisation d'hydroxysilane conduit à la formation d'eau. L'utilisation d'alkoxysilanes conduit à la formation des alcools correspondants (méthanol pour méthoxysilane et éthanol pour éthoxysilane). Ces différentes réactions de greffage conduisent à la formation d'un lien chimique covalent avec le support de même nature chimique [-Si-O-(Support)].

La polymérisation de chlorosilanes, d'hydroxysilanes ou d'alkoxysilanes est connue per se et a été décrite dans "Silica Gel and Bonded Phases", R.P.W. Scott, 1993, Separation Sciences Series, R.P.W. Scott et C.F. Simpson éditeurs, par John Wiley & Sons Ltd.

La polymérisation de chlorosilanes a lieu en présence de traces d'eau ; les hydroxysilanes polymérisent en formant de l'eau et les alkoxysilanes polymérisent en libérant l'alcool correspondant (méthanol pour méthoxysilanes et éthanol pour éthoxysilanes). Ces différentes réactions de polymérisation conduisent à la réalisation de liens covalents de même nature chimique: -Si-O-Si- (le lien siloxane ou greffon siloxane).

En ne prenant en compte, au niveau du composite, que les parties chimiques réactives, à savoir le support et le radical de formule (II) contenu dans les dérivés de polysaccharides (Ia) à (Ik), le bilan des deux réactions chimiques concomitantes mises en jeu pour synthétiser le matériau support à partir du composite est le suivant :

- réaction avec le support :

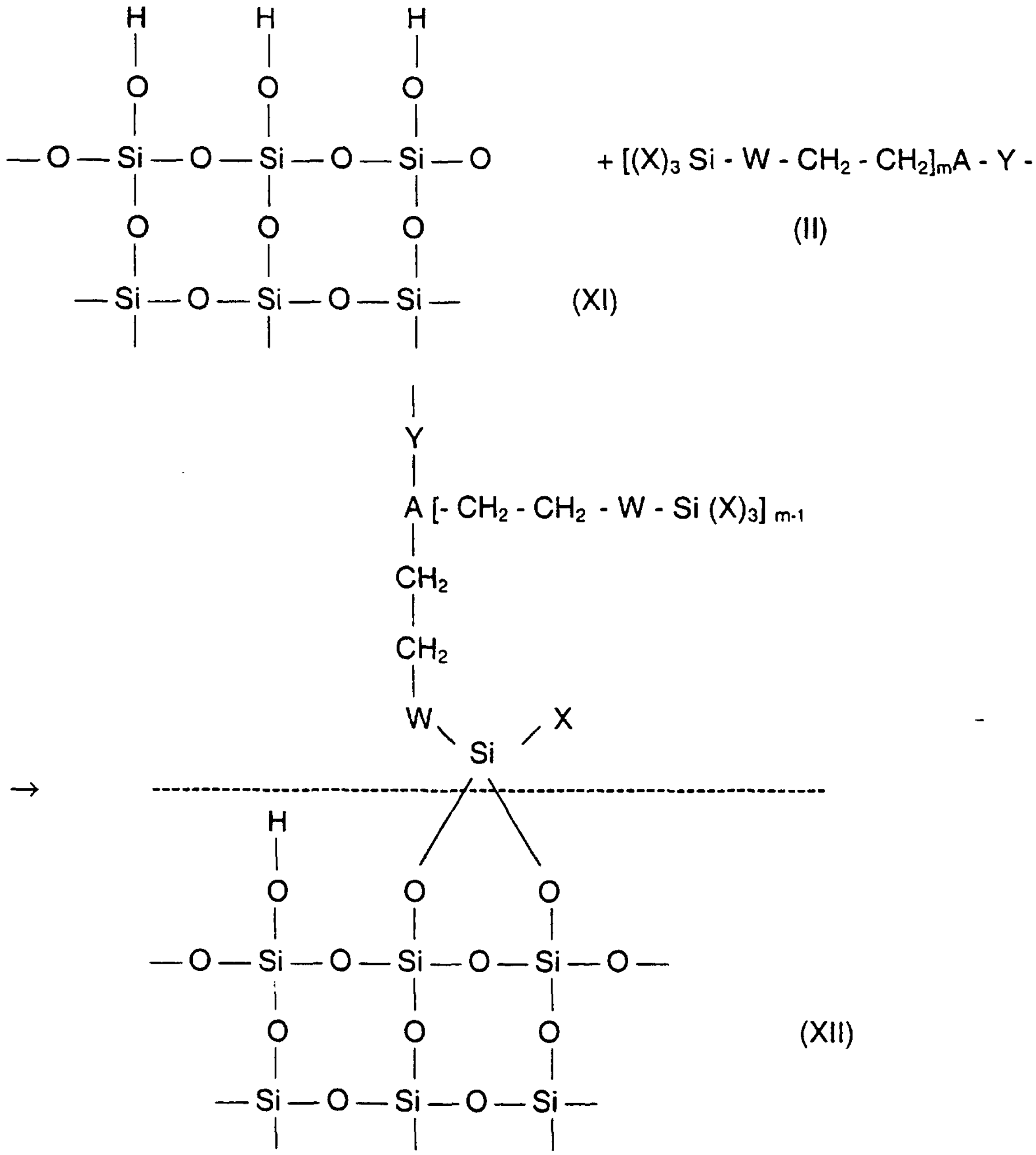

(XI) (II) (XII)

Afin d'éviter une complexité trop grande dans la figure représentant le matériau support de formule générale (IX), la partie radical $[CH_2\text{-}CH_2\text{-}W\text{-}Si(X)_3]_{m-1}$ n'ayant pas réagi n'a pas été représentée.

Bien que non représentée dans la formule (IX), la partie radical ci-dessus peut évidemment entrer en réaction et particulièrement dans la réaction concomitante à la réaction précédente "réaction avec le support" et qui est appelée "réticulation". Dans ce cas la partie radical m-1 entre en jeu et conduit à un produit de réaction de rang m-2 et ainsi de suite.

- Réticulation :

$- Y - A[CH_2 - CH_2 - W - Si(X)_3]_m + [(X)_3Si - W - CH_2 - CH_2]_mA - Y -$

----------->

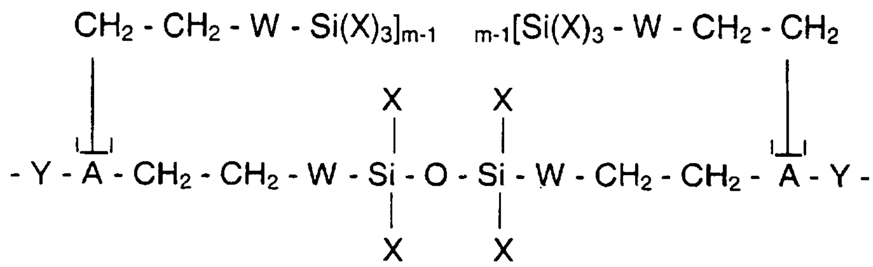

(XIII)

et / ou

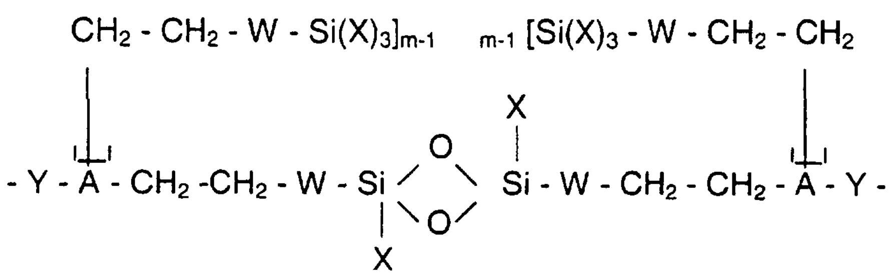

(XIV)

Dans les formules (XIII) et (XIV), comme dans le cas des composés de formules (XII), la partie radical $[-CH_2 - CH_2 - W - Si(X)_3]_{m-1}$ peut concomitamment réagir pour conduire à une nouvelle liaison covalente de rang m-2, pouvant elle-même conduire à une liaison de range m-3 et ainsi de suite.

L'invention concerne également les méthodes d'utilisation desdits matériaux supports en séparation et en préparation d'énantiomères par mise en oeuvre en :

* chromatographie gazeuse
* chromatographie liquide, de -10 °C à + 80°C, en particulier dans les solvants organiques polaires purs comme ceux cités dans le tableau ci-dessous

| Solvants | Solvants |
|---|---|
| Diisopropyléther | Propionitrile |
| Diéthyléther | Benzène |
| Dibutyléther | Chlorure de butyle |
| Tert-butyl methyléther | Chloroheptane |
| Acétaldéhyde diéthyl acétal | 1,1,1-trichloréthane |
| 1 ,4-dioxane | Dichloro 1,2-éthane |
| Ethylèneglycol diméthyléther | Trifluoroéthanol |
| 2-méthoxy éthyl éther | Hydroperoxyde de tert-butyle |
| Ethyl butyrate | Acétate de butyle |
| Méthanol | Ethanol |

(suite)

| Solvants | Solvants |
|---|---|
| Isopropanol | 1-butanol |
| Acétonitrile | Dichlorométhane |
| Chloroforme | Tétrachlorure de carbone |
| Dichloréthane | Acétate d'éthyle |
| Acétate de méthyle | Dichlorobenzènes |
| Xylènes | Diméthyl sulfoxyde |
| Trichlorétane | Diméthyl formamide |
| Tétrahydrofurane | |

Dans les mélanges hydro-organiques, aqueux ou organiques, en conditions isocratiques ou en mode gradient :

* chromatographie supercritique
* électrophorèse ou électrochromatographie
* percolation au travers de membranes constituées desdits matériaux supports

Les exemples suivants illustrent la présente invention mais n'en constituent nullement une limitation.

EXEMPLE 1.

On met en suspension 0,5 g de cellulose native (commercialisée par la société Merck), contenant 3,1 mM de motifs glucose, dans 15 $cm^3$ de toluène. Après déshydratation de la cellulose par distillation azéotropique jusqu'à siccité, on ajoute 40 $cm^3$ de pyridine. Après distillation de 15 $cm^3$ de solvant et refroidissement, on ajoute 1,32 g de chlorure de 10-undécénoyle (6,5 mM). On chauffe au reflux pendant 1 heure et on effectue un prélèvement dont l'analyse élémentaire (C = 67,55 % ; H = 9,27 %) montre que le degré de substitution est 1,8. On ajoute alors 0,850 g de 3,5-diméthyl-phénylisocyanate (5,6 mM) et on chauffe au reflux pendant 1 nuit. Après filtration à chaud sur verre fritté n° 2, le mélange réactionnel est versé dans 100 $cm^3$ de méthanol. Après filtration, le précipité est dissous dans le minimum de pyridine. La solution est filtrée sur verre fritté n° 2 et le filtrat est versé dans un mélange éthanol-eau (1/1 en volumes). Après filtration et lavage au méthanol, on obtient un produit dont les caractéristiques sont les suivantes :

- analyse élémentaire : C = 68,58 % : H = 8,67 % ; N = 2,12 %
- degré de substitution : 1,8 (undécénoyle), 0,9 (3,5-diméthylphénylcarbamate).

On obtient un composé de formule générale (Id)
avec

$R_1$ =
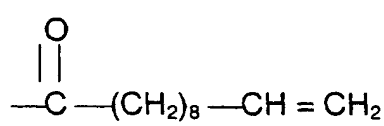

$R_2$ et $R_3$ =
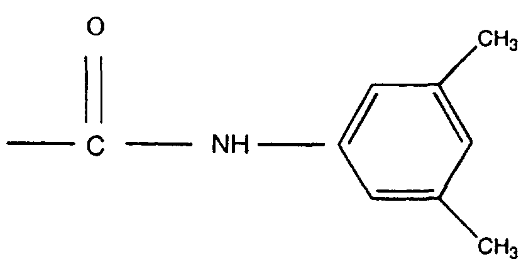

et

$$X_1 = X_2 = X_3 = \text{-O-}$$

Ce composé est référencé Id-E1.

0,3 g du composé précédent sont mis en solution dans 50 ml de chloroforme. 70 µl de 3-mercaptopropyltriméthoxysilane sont additionnés, ainsi que 30 mg d'azo-isobutyronitrile. Le milieu réactionnel est porté 6 heures à reflux. Le milieu réactionnel est précipité sur 200 ml de chloroforme et la suspension est filtrée, puis séchée à 40 °C sous vide. Le produit séché est mis en solution dans 20 ml de toluène et 20 ml de pyridine et 4 g de gel de silice 5 µm (diamètre de particule), 200 Å (diamètre de pore) sont additionnés. La suspension est portée 48 heures à reflux et le solvant est évaporé sous vide à 80 °C. Le solide est séché à 60 °C sous vide, puis broyé. Il est repris dans 50 ml de tétrahydrofurane pendant 3 heures puis filtré. Il est à nouveau séché à 60 °C sous vide.

Une colonne HPLC est remplie avec ce support et la colonne est insérée dans un ensemble HPLC.

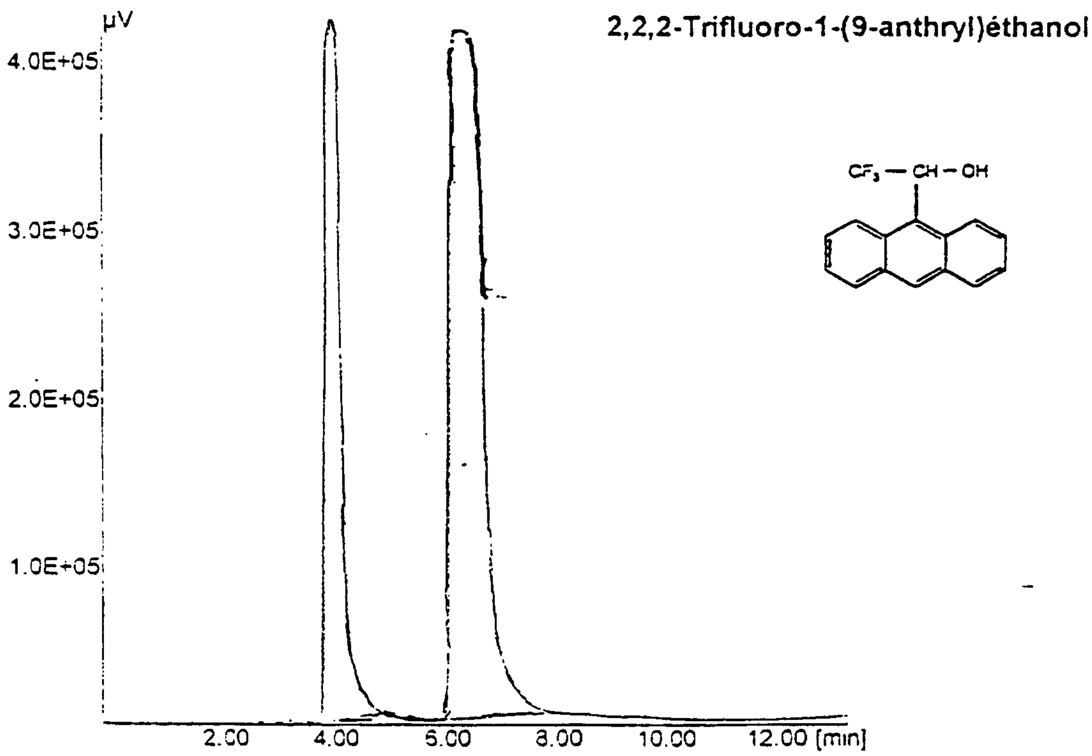


Colonne HPLC 250 x 4,6 mm
Soluté : 2,2,2,-trifluoro-1-(9-anthryl)éthanol
Phase mobile : Chloroforme pur
Débit = 1 ml/mn - D.O. = 0,01 - température 25 °C - λ = 254 nm
On obtient : k'1 = 3,14 - k'2 = 4,83 - α = 1,54

<u>EXEMPLE 2.</u>

0,3 g du composé référencé Id-E1 de l'exemple 1 sont mis en solution dans 30 ml de tétrahydrofurane. 0,1 ml de triéthoxysilane sont additionnés, 0,05 g d'acide hexachloroplatinique sont ajoutés. La solution obtenue est portée à reflux pendant 48 heures. La masse réactionnelle est refroidie, puis coulée sur 300 ml de méthanol. La suspension obtenue est filtrée puis séchée à 40 °C sous vide. Le produit sec est à nouveau mis en solution dans 40 ml de pyridine et 4 g de gel de silice, de diamètre de particule 5 µm et de porosité 200 Å sont additionnés. La suspension réactionnelle est portée à reflux 48 heures, puis la pyridine est évaporée à sec. Le solide est mis à séché à 80 °C sous vide. Il est ensuite repris dans 50 ml de tétrahydrofurane pendant 3 heures puis filtré. Il est à nouveau séché à 60 °C sous vide.

Une colonne HPLC est remplie avec ce support et la colonne est insérée dans un ensemble HPLC.

1,1'-BI-2-NAPHTOL

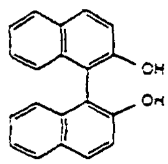

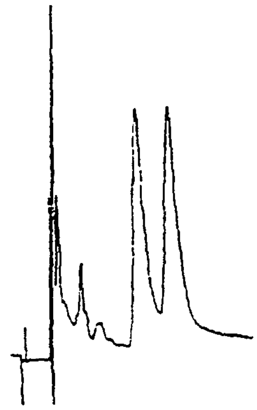

Colonne HPLC 250 x 4,6 mm
Soluté : 1,1-binaphtol
Phase mobile : Chlorobutane
Débit = 1 ml/mn - D.O. = 0,1 - $\lambda$ = 254 nm
k'1 = 3,00 - k'2 = 4,43 - $\alpha$ = 1,48

<u>EXEMPLE 3.</u>

0,3 g du composé référencé Id-E1 de l'exemple 1 sont mis en solution dans 100 ml de toluène à reflux. 50 ml de toluène sont distillés jusqu'à disparition complète de l'azéotrope binaire toluène/eau. 3 ml de pyridine sont additionnés (pyridine anhydre préalablement desséchée) et 0,1 ml de trichlorosilane sont additionnés. 0,05 g d'acide hexachloroplatinique sont ajoutés. La solution obtenue est portée 48 heures à reflux sous un léger courant d'azote sec (déshydratation de l'azote par bulleur à acide sulfurique concentré). 3 g de gel de silice (5 µm de diamètre de particule et 200 Å de diamètre de pore) préalablement séchés à 120 °C sous vide sont additionnés et la masse réactionnelle est portée à reflux 48 heures. 1 ml d'eau est additionné avec précaution et la suspension réactionnelle est portée 48 heures à 70 °C sous agitation. Le toluène est distillé à sec à pression ordinaire. Le précipité est isolé par filtration et lavé par deux fois avec 50 ml de tétrahydrofurane. Le solide est séché à 60 °C sous vide.
Une colonne HPLC est remplie avec ce support et la colonne et insérée dans un système HPLC.

2,2,2-Trifluoro-1-(9-anthryl)éthanol

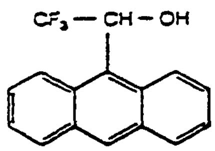

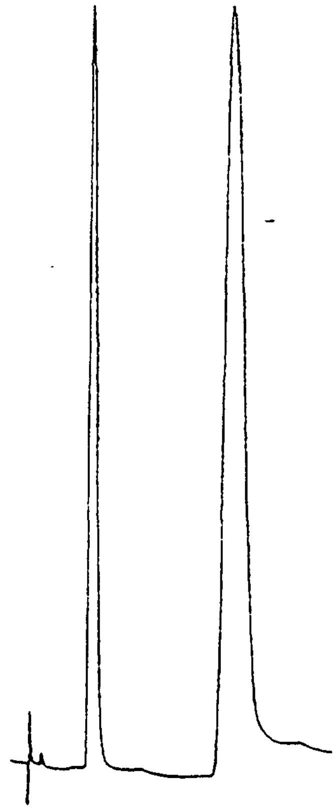

## Revendications

1. Dérivé polymérisable et réticulable de type chlorosilane, hydroxysilane ou alkoxysilane de polysaccharides ou d'oligosaccharides, constitué d'enchaînements linéaires, ramifiés ou cycliques d'unités osidiques chirales, et représenté par l'une des formules générales (Ia) à (Ik) suivantes :

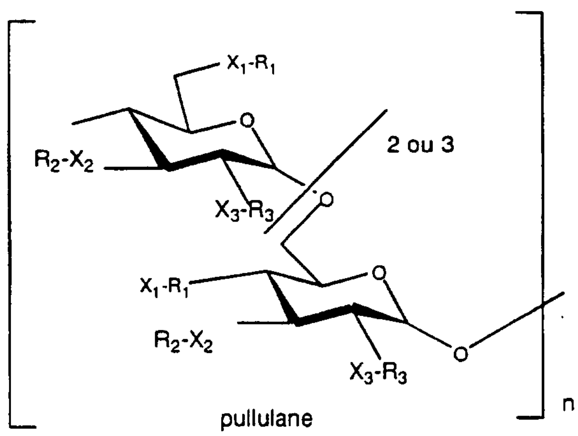

pullulane

Ia

Ib

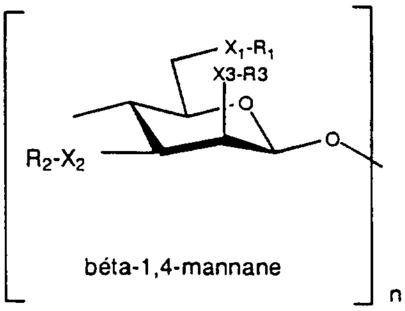

béta-1,4-mannane

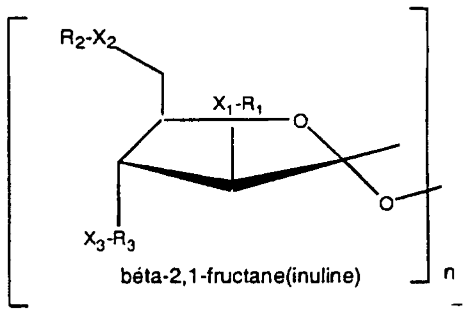

béta-2,1-fructane(inuline)

Ic

Id

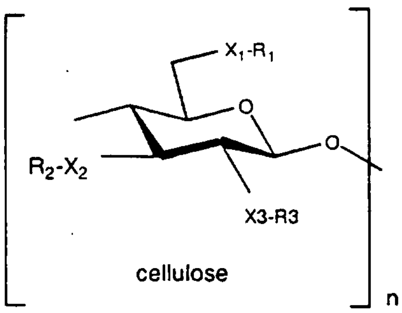

cellulose

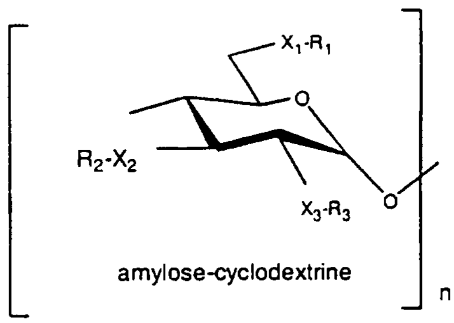

amylose-cyclodextrine

Ie

If

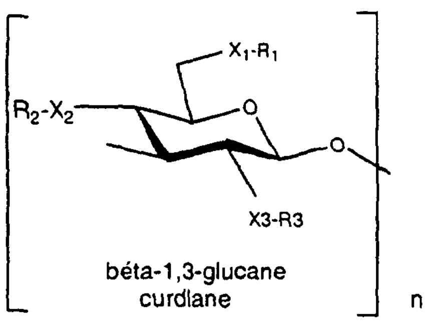

béta-1,3-glucane
curdlane

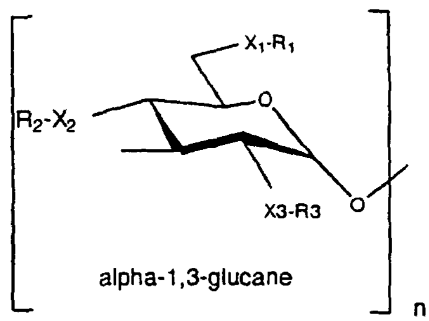

alpha-1,3-glucane

Ig

Ih

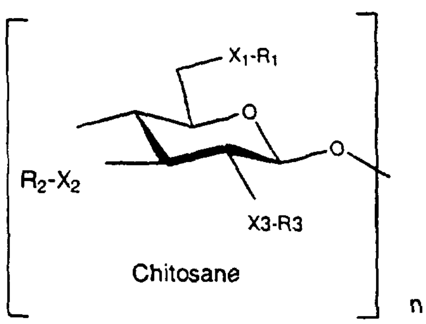

Chitosane

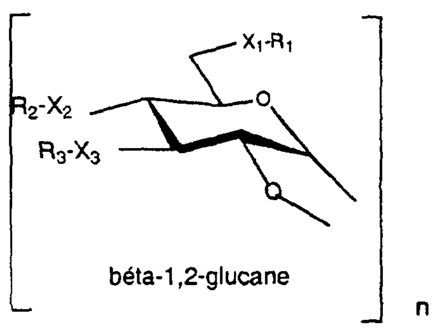

béta-1,2-glucane

Ii

Ij 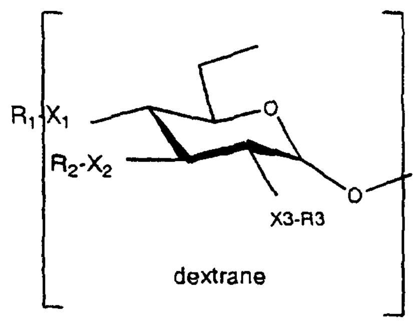 dextrane

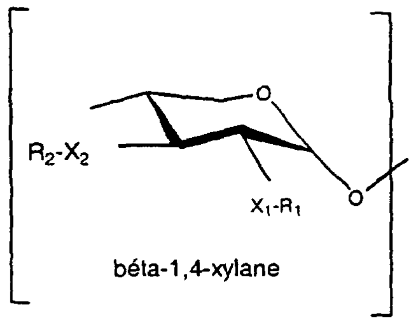 béta-1,4-xylane Ik

dans lesquelles :

a) les symboles $X_1$, $X_2$ et $X_3$, identiques ou différents, représentent chacun un atome d'oxygène ou le groupement -NH ;
b) chacun des symboles $R_1$, $R_2$ et $R_3$ représentent indépendamment :

- un radical chorosilane, hydroxysilane ou alkoxysilane ayant la formule générale : $[(X)_3Si\text{-}W\text{-}CH_2\text{-}CH_2]_mA\text{-}Y\text{-}$ (II) dans laquelle m est un nombre entier non nul au plus égal à 5, Y représente une simple liaison, un groupement -NH-CO-, un groupement -NH-CS- ou un groupement -CO-, A représente une simple liaison, un radical alkylène linéaire ou ramifié ayant de 1 à 21 atomes de carbone, ou un radical arylène ayant de 6 à 18 atomes de carbone ou un radical aralkylène ayant de 7 à 40 atomes de carbone, W représente une simple liaison ou le groupement $-CH_2\text{-}CH_2\text{-}CH_2\text{-}S\text{-}$ et X représente un halogène, un hydroxyle ou un alkoxy,
- ou un radical ayant la formule $A_2\text{-}A_1\text{-}CX_4$ (III) dans laquelle $X_4$ représente un atome d'oxygène ou de soufre, $A_1$ représente une simple liaison ou un groupement -NH- et $A_2$ représente un radical aryle ayant de 6 à 24 atomes de carbone, un radical aralkyle ayant de 7 à 36 atomes de carbone ou un radical alkylaryle ayant de 7 à 18 atomes de carbone,
- ou un atome d'hydrogène ou un groupe $NO_2$;

n étant un nombre entier compris entre 5 et 20 000,
étant entendu que dans chaque unité osidique chirale (Ia) à (Ik), l'un au moins des symboles $X_1$, $X_2$ et $X_3$ représente un atome d'oxygène, et que dans au moins une partie des unités structurales constituant le polysaccharide, l'un au moins des symboles $R_1$, $R_2$ et $R_3$ représente un radical de formule générale (II) et l'un au moins des symboles $R_1$, $R_2$ et $R_3$ représente un radical de formule générale (III).

2. Dérivé silane de polysaccharide selon la revendication 1 **caractérisé en ce que** les radicaux aryles sont des radicaux phényles ou naphtyles et/ou les radicaux arylènes sont des radicaux phénylènes ou naphtylènes.

3. Dérivé silane de polysaccharide selon la revendication 1 ou 2 dans lequel les radicaux arylènes ou aryles contenus respectivement dans les radicaux de formule générale (II) et (III) sont substitués par un ou plusieurs atomes ou radicaux identiques ou différents choisis parmi les atomes d'halogène, les radicaux alkyles contenant 1 à 4 atomes de carbone, les radicaux alkoxy contenant 1 à 4 atomes de carbone et les groupes nitro.

4. Dérivé silane de polysaccharide selon l'une des revendications 1 à 3, **caractérisé en ce que** le degré de polymérisation est compris entre 5 et 20 000.

5. Dérivé silane de polysaccharide selon l'une des revendications 1 à 4, **caractérisé en ce qu'**il contient de 0,05 à 2,95 groupes de formule générale (II) par unité structurale et de 0,05 à 2,95 groupes de formule générale (III) par unité osidique chirale.

6. Composé réticulé issu d'un dérivé selon l'une des revendications 1 à 5, **caractérisé en ce qu'**il est représenté par l'une des formules générales (IXc), (IXd), (XIII) et (XIV):

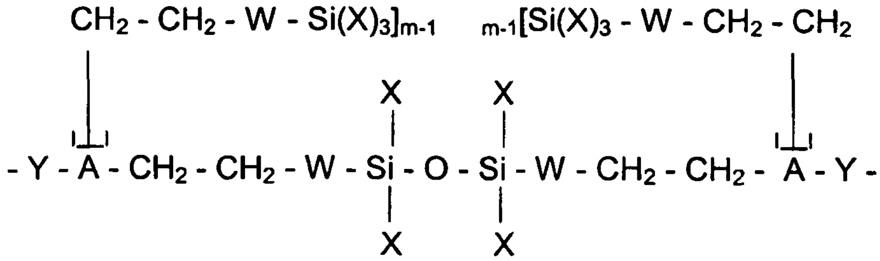

(XIII)

et / ou

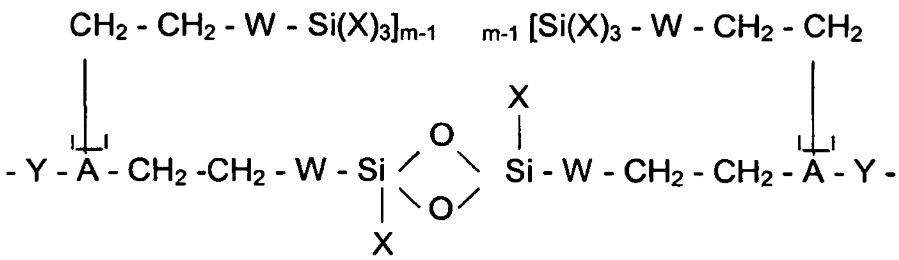

(XIV)

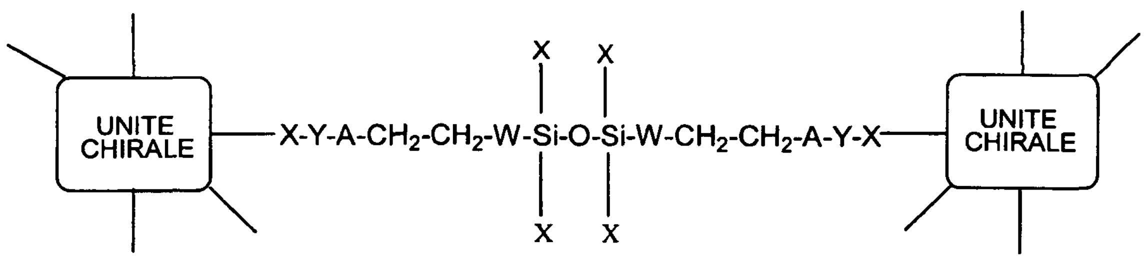

ou

(IXc)

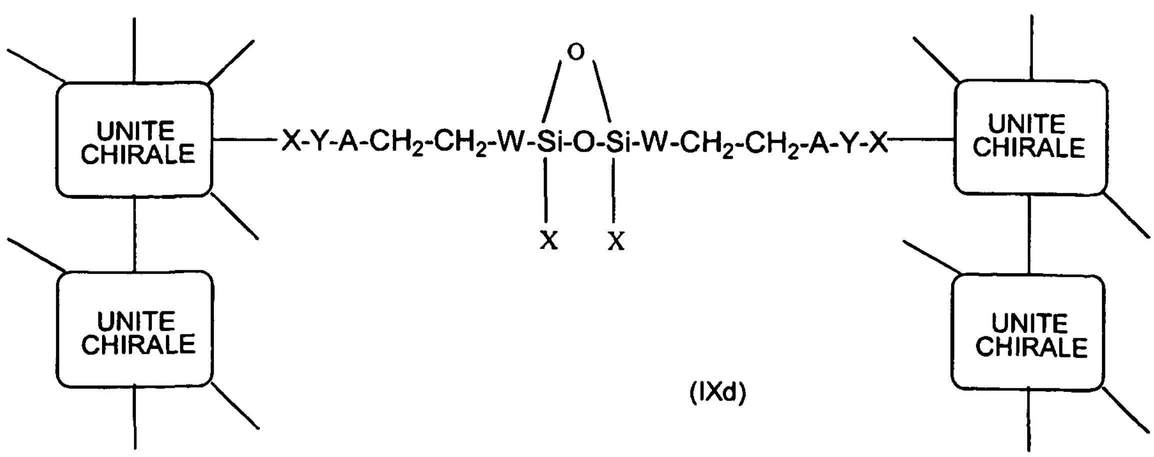

(IXd)

la formule (IXc) correspondant à la formule (XIII) pour m = 1
la formule (IXd) correspondant à la formule (XIV) pour m = 1,
et Y, A, W, X et m ayant la même signification que dans la formule (II).

**7.** Méthode de préparation d'un dérivé silane de polysaccharide selon l'un des revendications 1 à 5 **caractérisé en ce que** l'on fait agir sur un polysaccharide

- dans une étape 1, un produit de formule générale $(CH_2{=}CH)_mA{-}Y_1$ (IV) dans laquelle A est défini comme dans la revendication 1 et $Y_1$ représente un atome d'halogène, un reste -N=C=O ou -N=C=S ou un reste -CO-Z dans lequel Z représente un atome d'halogène, pour introduire un radical éthylénique qui sera subséquemment transformé à l'étape 3.
- dans une étape 2 éventuelle, un isocyanate ou un isothiocyanate de formule générale $A_2{-}A_1{-}N{=}C{=}X$ (V) dans laquelle $A_2$ est défini comme dans la revendication 1 et X représente un atome d'oxygène ou de soufre, ou un produit de formule générale $A_2{-}A_1{-}CO{-}Z_1$ (VI) dans laquelle $A_2$ et $A_1$ sont définis comme dans la revendication 1 et $Z_1$ représente un atome d'halogène, pour introduire un radical de formule générale (III); et
- dans une étape 3, un produit de formule générale

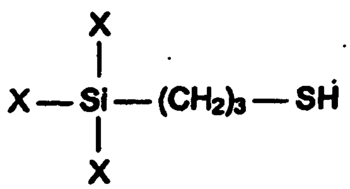

ou

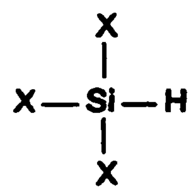

(VII) (VIII)

dans lesquelles X est défini comme dans la revendication 1, pour introduire un radical de formule générale (II).

**8.** Matériau support **caractérisé en ce qu'**il contient un ou des dérivés silanes de polysaccharides de formule générale (Ia) à (Ik) selon l'une des revendications 1 à 5, et dont les radicaux chlorosilanes, hydroxysilanes ou alkoxysilanes de formule générale (II) ont été mis en réaction, concomitamment, entre eux, pour conduire à une polymérisation et/ou à une réticulation interchaîne dans le ou les dérivés silanes de polysaccharides, et avec un support pour la création de liaisons covalentes -Si-O-(Support)-, lesdits matériaux supports étant représentés par la combinaison des formules générales :

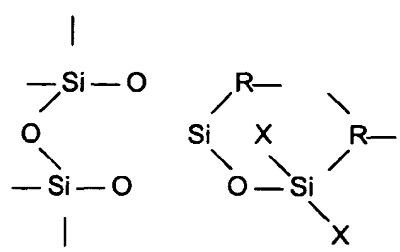

(IXaa)

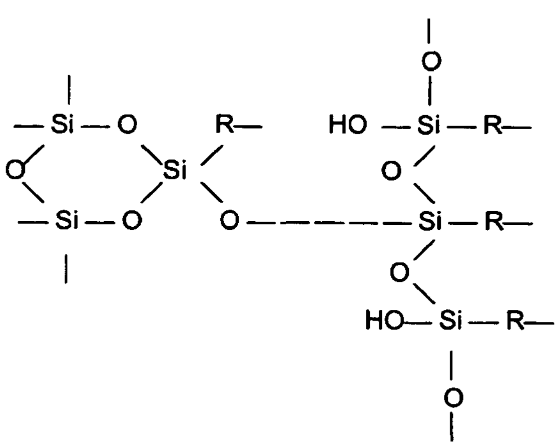

etc. (IXa)

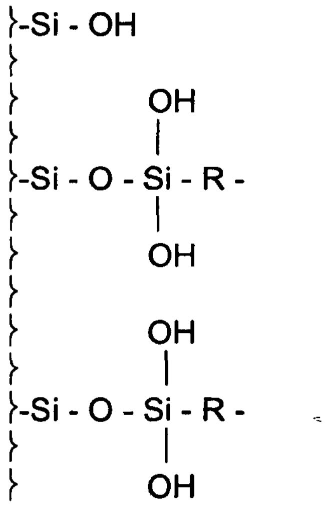

(IXbb)

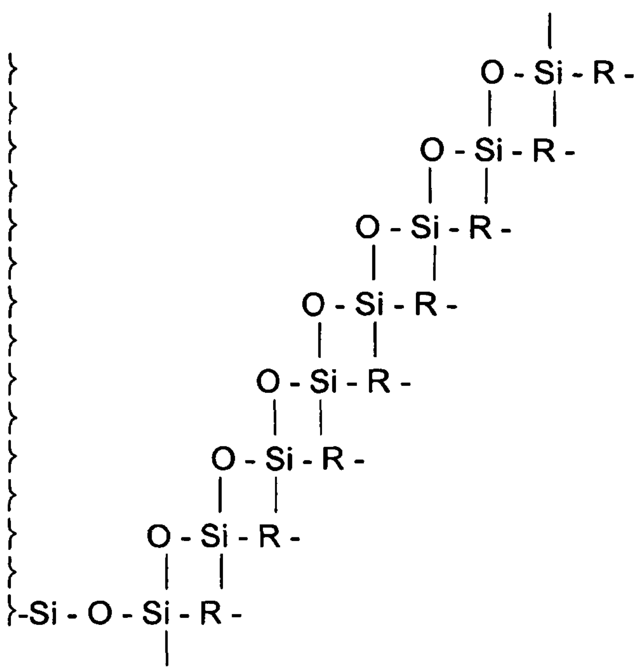

(IXb)

ou

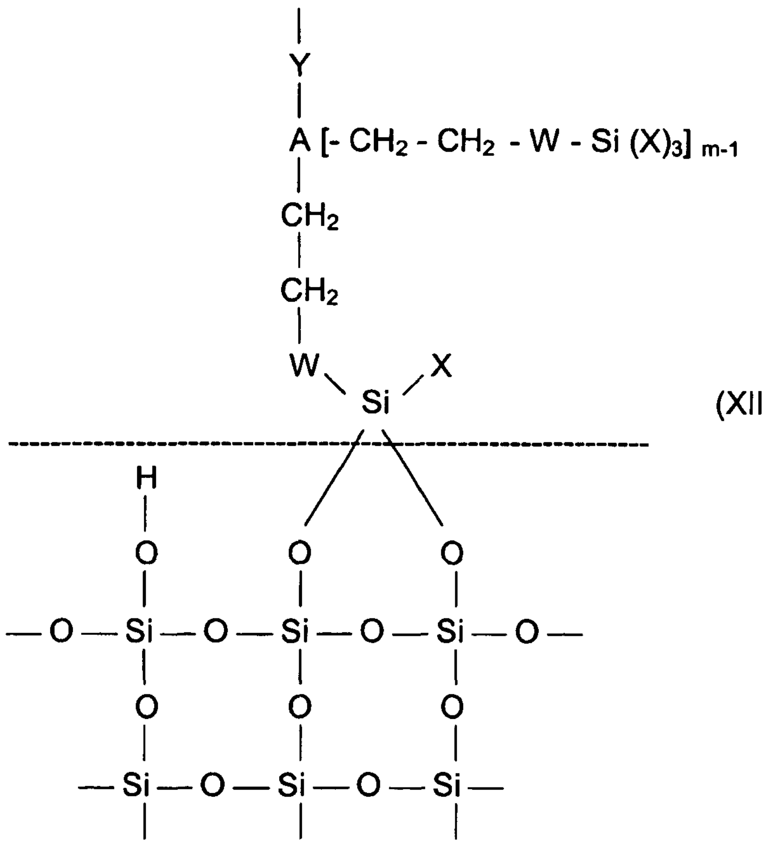

(XII)

et (IXc), (IXd), (XIII) et (XIV), définies dans la revendication 6, où "unité chirale" correspond à l'une des unités osidiques chirales contenues dans l'enchaînement polysaccharidique représentées par les formules générales (Ia) à (Ik).

9. Matériau support selon la revendication 8 **caractérisé en ce qu'**il est représenté par la formule générale (IX), combinaison de la formule (XII) et de la formule (IXc) pour m = 1, m ayant la même signification que dans la formule (II) :

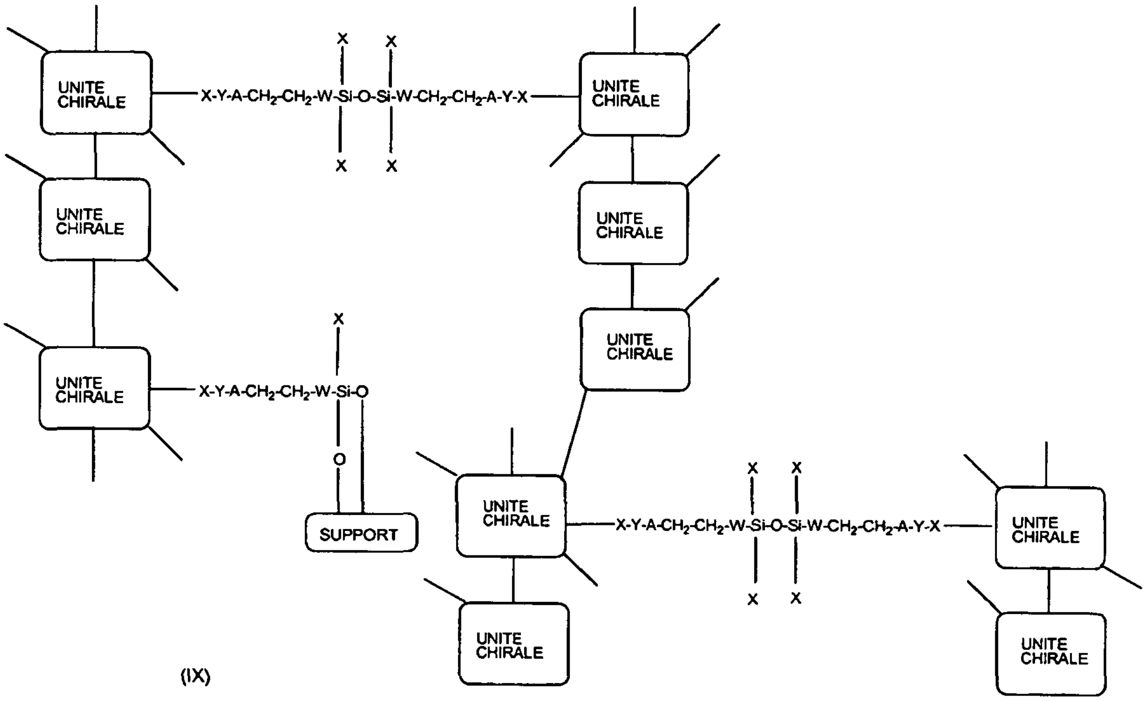

(IX)

**10.** Matériau support selon l'une des revendications 8 et 9 **caractérisé en ce que** le dérivé silane de polysaccharide de formules (Ia) à (Ik) qu'il contient est polymérisé ou réticulé en un réseau tridimensionnel par formation de liaisons ≡ Si-O-Si≡ ou

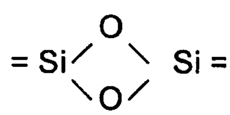

**11.** Matériau support selon l'une des revendications 8 à 10 **caractérisé en ce que** le dérivé silane de polysaccharide est à la fois lié au support par liaison chimique covalente et polymérisé ou réticulé en un réseau tridimensionnel.

**12.** Matériau support selon l'une des revendications 8 à 11, **caractérisé en ce qu'**il comprend au moins un composé de formule générale (IXaa), (IXa), (IXbb), (IXb) ou (XII).

**13.** Matériau support selon l'une des revendications 8 à 11 sous forme d'un réseau tridimensionnel **caractérisé en ce qu'**il comprend au moins un composé de formule générale (IXc), (IXd), (XIII) ou (XIV).

**14.** Matériau support selon la revendication 8 **caractérisé en ce que** le support portant des liaisons covalentes est représenté par la formule générale suivante:

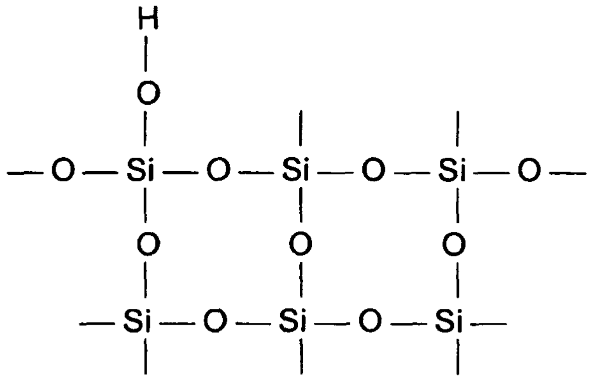

(X)

où Si représente l'atome de silicium, de titane, de zirconium, d'aluminium ou de magnésium.

**15.** Matériau support selon les revendications 8 à 14 **caractérisé en ce que** sa granulométrie est comprise entre 0,1 µm et 1 mm et sa porosité entre 0,1 $m^2/g$ et 800 $m^2/g$.

**16.** Méthode d'obtention d'un matériau support selon les revendications 8 à 15 **caractérisée en ce qu'**on dépose un dérivé silane de polysaccharide sur un support et met ensuite ledit dérivé silane de polysaccharide en réaction avec le support et de façon concomitante avec lui-même pour créer des liaisons covalentes entre le dérivé silane de polysaccharide et le support et pour réticuler le dérivé silane de polysaccharide et le support et pour réticuler le dérivé silane de polysaccharide dans un réseau tridimensionnel, ladite méthode comprenant :

- un dépôt physique d'un dérivé silane de polysaccharide de formule générale (Ia) à (Ik) sur un support représenté par la formule générale :

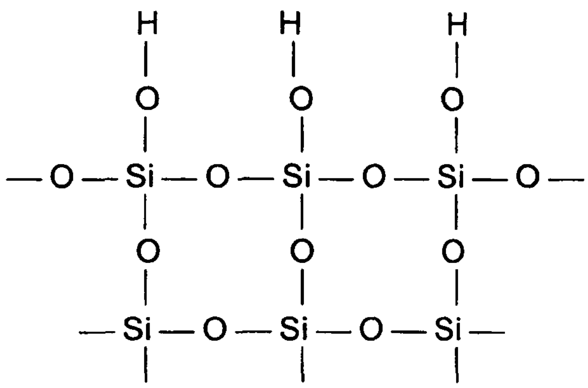

(XI)

où Si a la même signification que dans la formule (X) ; et

- la mise en oeuvre de deux modes de réactions consistant en

  * la réaction avec le support, de formule générale (XI), des radicaux silanes de formule générale (II) pour conduire aux composés de formule générale (IXaa), (IXa), (IXbb), (IXb) et (XII) :

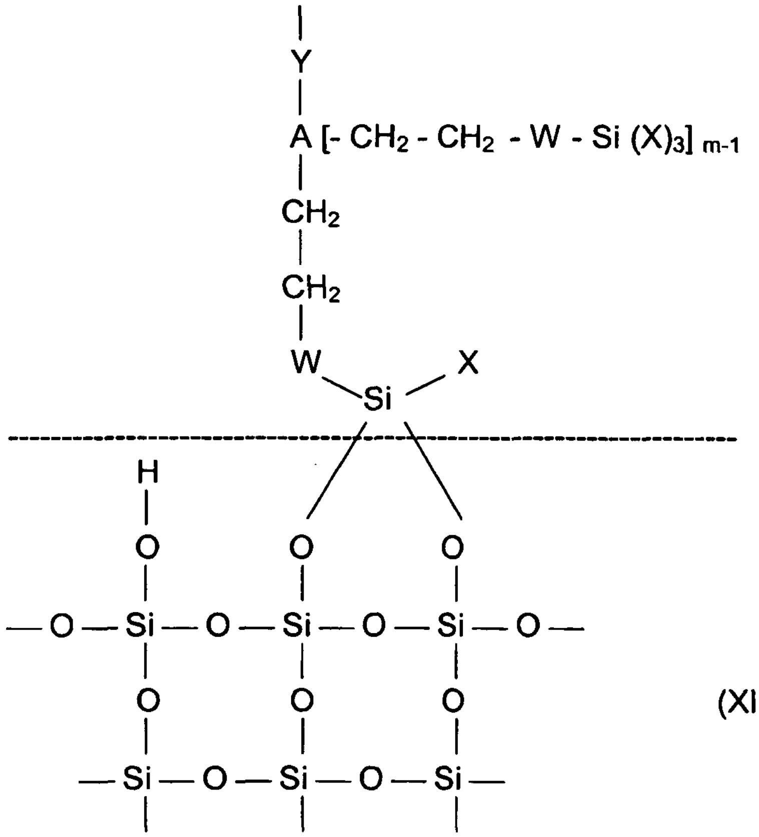

(XII)

* et/ou la réaction des radicaux silanes de formule générale (II) sur eux-mêmes pour conduire aux composés de formule générale (IXc), (IXd), (XII) et (XIV).

**17.** Utilisation d'un matériau support selon l'une des revendications 8 à 15 pour la préparation et la séparation d'énantiomères avec mise en oeuvre de moyens de chromatographie, liquide ou gazeuse ou supercritique, ou de moyens d'électrophorèse ou d'électrochromatographie.

**18.** Utilisation d'un matériau support selon l'une des revendications 8 à 15 dans la composition d'une membrane de percolation.

**Patentansprüche**

**1.** Polymerisierbares und vernetzbares Derivat vom Typ Chlorsilan, Hydroxy-Silan oder Alkoxy-Silan von Polysacchariden oder Oligo-Sacchariden, bestehend aus linearen, verzweigten oder zyklischen Ketten aus osidischen chiralen Einheiten, und repräsentiert durch eine der folgenden allgemeinen Formeln (1a) bis (1k):

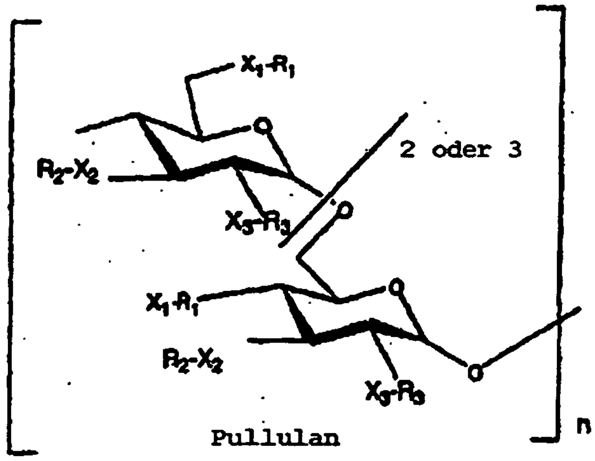

Pullulan

Ia

Ib

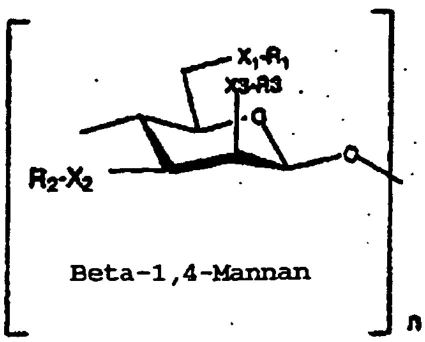

Beta-1,4-Mannan

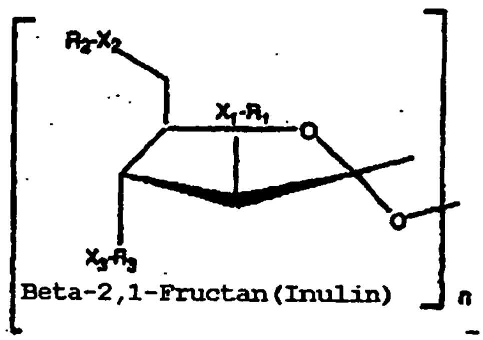

Beta-2,1-Fructan(Inulin)

Ic

Id

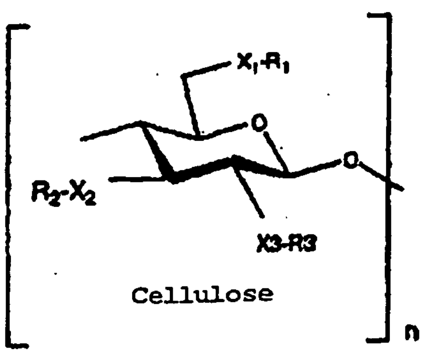

Cellulose

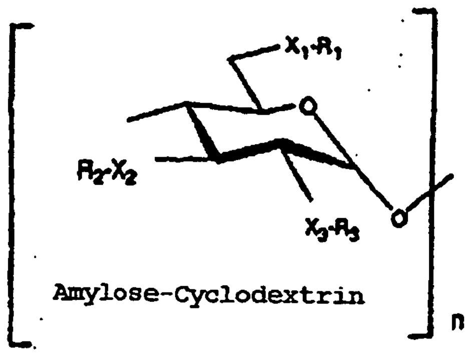

Amylose-Cyclodextrin

Ie

If

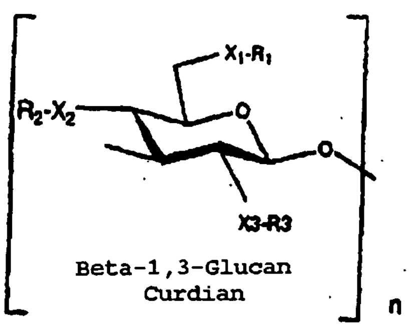

Beta-1,3-Glucan
Curdian

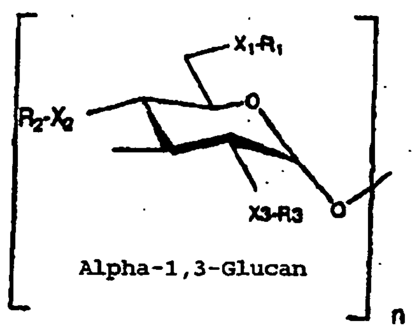

Alpha-1,3-Glucan

Ig

Ih 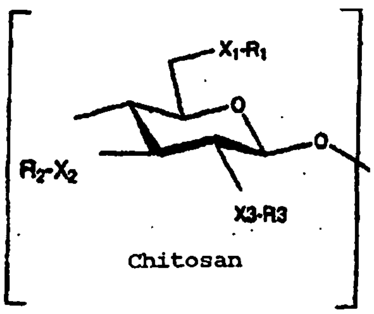
Chitosan

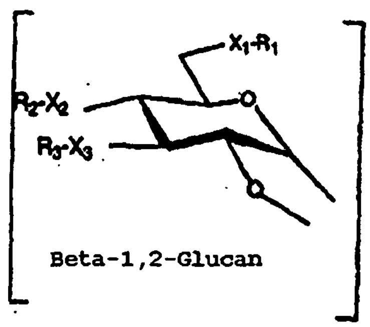 Ii
Beta-1,2-Glucan

Ij 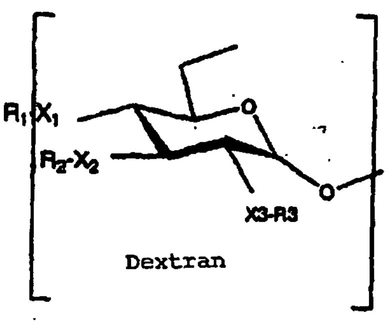
Dextran

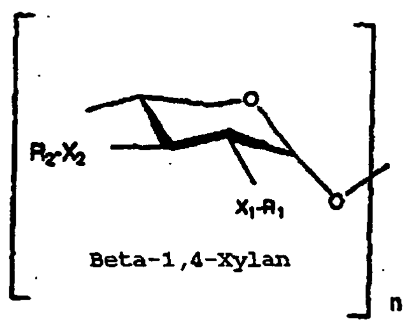 Ik
Beta-1,4-Xylan

in welchen:

a) die identischen oder verschiedenen Symbole $X_1$, $X_2$ und $X_3$ jeweils ein Sauerstoff-Atom oder die NH-Gruppe repräsentieren;
b) jedes der Symbole $R_1$, $R_2$ und $R_3$ unabhängig voneinander repräsentieren:

- ein Chlorsilan-Radikal, Hydroxysilan-Radikal oder Alkoxysilan-Radikal der allgemeinen Formel: $[(X)_3Si\text{-}W\text{-}CH_2\text{-}CH_2]_mA\text{-}Y\text{-}$(II), in welcher m eine ganze Zahl ungleich Null bis höchstens gleich 5 ist, Y eine einfache Verbindung, eine -NH-CO- Gruppe, eine -NH-CS- Gruppe oder eine -CO- Gruppe repräsentiert, A eine einfache Verbindung, ein lineares oder verzweigtes Alkylen-Radikal, welches von 1 bis 21 Kohlenstoff-Atome aufweist, oder ein Arylen-Radikal, welches von 6 bis 18 Kohlenstoff-Atome aufweist, oder ein Aralkylen-Radikal, welches von 7 bis 40 Kohlenstoff-Atome aufweist, repräsentiert, W eine einfache Verbindung oder die $-CH_2\text{-}CH_2\text{-}CH_2\text{-}S\text{-}$ Gruppe repräsentiert, und X ein Halogen, ein Hydroxyl oder ein Alkoxy repräsentiert,
- oder ein Radikal, welches die Formel $A_2\text{-}A_1\text{-}CX_4$(III) aufweist repräsentiert, wobei $X_4$ ein Sauerstoff-Atom oder Schwefel-Atom repräsentiert, $A_1$ eine einfache Verbindung oder eine -NH- Gruppe repräsentiert, und $A_2$ ein Aryl-Radikal, welches von 6 bis 24 Kohlenstoff-Atome aufweist, oder ein Aralkyl-Radikal, welches von 7 bis 36 Kohlenstoff-Atome aufweist, oder ein Alkylaryl, welches von 7 bis 18 Kohlenstoff-Atome aufweist,
- oder ein Wasserstoff-Atom oder eine $NO_2$-Gruppe aufweist,

wobei n eine ganze Zahl ist, welche zwischen 5 und 20 000 enthalten ist, wobei verstanden wird, dass in jeder osidischen chiralen Einheit (1a) bis (1k) wenigstens eines der Symbole X1, X2 und X3 ein Sauerstoff-Symbol repräsentiert, und dass wenigstens in einem Teil der Struktur-Einheiten, welche Polysaccharide bilden, wenigstens eines der Symbole R1, R2 und R3 ein Radikal der allgemeinen Formel (II) repräsentiert, und wenigstens eines der Symbole R1, R2 und R3 ein Radikal der allgemeinen Formel (III) repräsentiert.

2. Polysaccharid-Silan-Derivat gemäß Anspruch 1, **dadurch gekennzeichnet, dass** die Aryl-Radikale Phenyl-Radikale oder Naphtyl-Radikale sind, und/oder dass die Arylen-Radikale Phenylen-Radikale oder Naphtylen-Radikale sind.

3. Polysaccharid-Silan-Derivat gemäß Anspruch 1 oder 2, wobei die jeweils in den Radikalen der allgemeinen Formel (II) und (III) enthaltenen Arylen-Radikale oder Aryl-Radikale mit einem oder mehreren identischen oder verschiedenen Atomen oder Radikalen substituiert werden, welche ausgewählt sind aus den WasserstoffAtomen, den 1 bis 4 Kohlenstoff-Atome aufweisenden Alkyl-Radikalen, den 1 bis 4 Kohlenstoff-Atome aufweisenden Alkoxy-Radikalen und den Nitro-Gruppen.

4. Polysaccharid-Silan-Derivat gemäß einem der Ansprüche 1 bis 3, **dadurch gekennzeichnet, dass** der Polymerisierungs-Grad zwischen 5 und 20 000 enthalten ist.

5. Polysaccharid-Silan-Derivat gemäß einem der Ansprüche 1 bis 4, **dadurch gekennzeichnet, dass** es von 0,05 bis 2,95 Gruppen der allgemeinen Formel (II) pro StrukturEinheit und von 0,05 bis 2,95 Gruppen der allgemeinen Formel (III) pro osidischer chiralen Einheit enthält.

6. Von einem Derivat gemäß einem der Ansprüche 1 bis 5 ausgehende Netz-Verbindung, **dadurch gekennzeichnet, dass** sie durch eine der allgemeinen Formeln (IXc), (IXd), (XIII) und (XIV) repräsentiert wird:

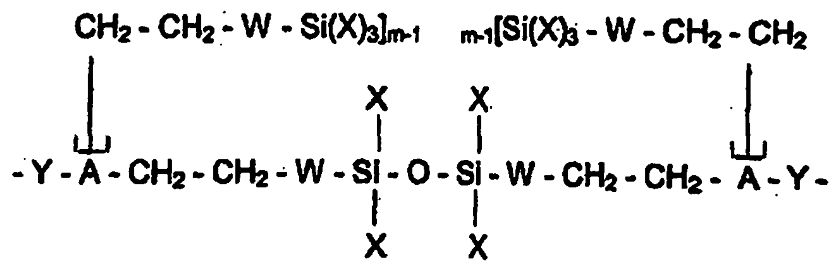

(XIII)

und/oder

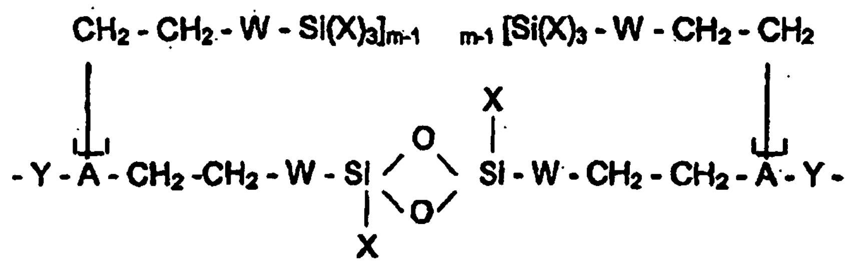

(XIV)

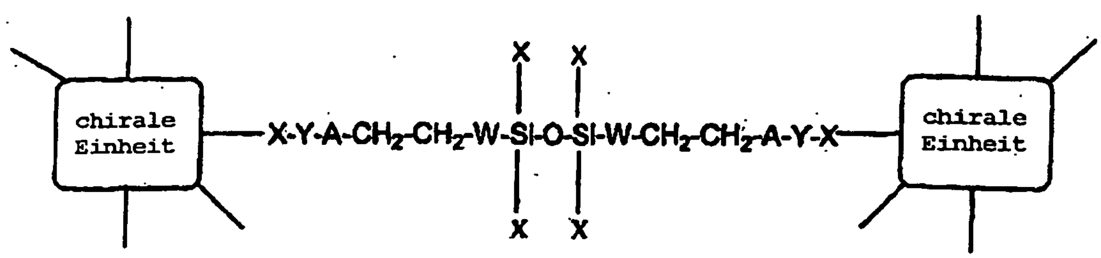

oder

(IXc)

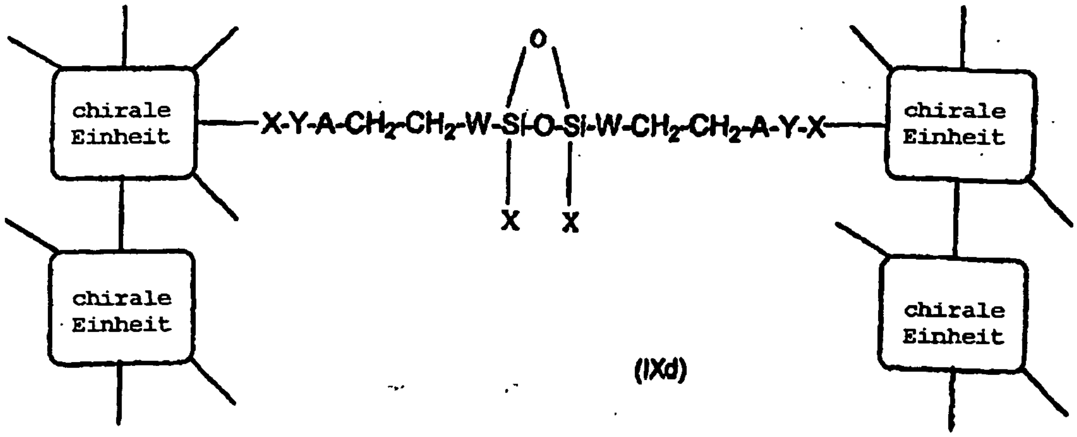

(IXd)

wobei:

die Formel (IXc) zur Formel (XIII) für m=1 korrespondiert,
die Formel (IXd) zur Formel (XIV) für m=1 korrespondiert,
und Y,A,W,X und m die gleiche Bedeutung haben wie in der Formel (II).

**7.** Verfahren zum Herstellen eines Silan-Derivates von Polysaccharid gemäß einem der Ansprüche 1 bis 5, **dadurch gekennzeichnet, dass** man auf ein Polysaccharid einwirken lässt:

- in einem Schritt 1: ein Produkt der allgemeinen Formel $(CH_2=CH)_mA\text{-}Y_1$(IV), wobei A wie in Anspruch 1 definiert ist, und wobei $Y_1$ ein Wasserstoff-Atom, einen -N=C=O Rest oder einen -N=C=S Rest oder einen -CO-Z Rest repräsentiert, bei welchem Z ein Wasserstoff-Atom repräsentiert, um ein Ethylen-Radikal einzuführen, welches in Schritt 3 anschließend transformiert werden wird;
- in einem eventuellen Schritt 2: ein Isocyanat oder ein Iso-Thio-Cyanat der allgemeinen Formel $A_2\text{-}A_1\text{-}N=C=X$ (V), wobei $A_2$ wie in Anspruch 1 definiert ist, und X ein Sauerstoff-Atom oder Schwefel-Atom repräsentiert, oder ein Produkt der allgemeinen Formel $A_2\text{-}A_1\text{-}CO\text{-}Z_1$(VI), wobei $A_2$ und $A_1$ wie in Anspruch 1 definiert sind und $Z_1$ ein Wasserstoff-Atom repräsentiert, um ein Radikal der allgemeinen Formel (III) einzuführen, und
- in einem Schritt 3 ein Produkt der allgemeinen Formel

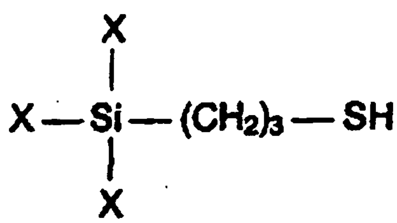 oder 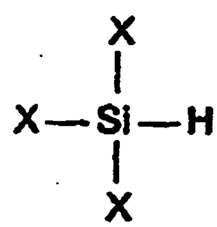

(VII) (VIII)

in welcher X wie in Anspruch 1 definiert ist, um ein Radikal der allgemeinen Formel (II) einzuführen.

**8.** Träger-Material, **dadurch gekennzeichnet, dass** es eines oder mehrere der Silan-Derivate von Polysacchariden der allgemeinen Formel (1a) bis (1k) gemäß einem der Ansprüche 1 bis 5 enthält, und wobei die Chlorsilan-Radikale, Hydroxysilan-Radikale oder Alkoxysilan-Radikale der allgemeinen Formel (II) miteinander zusammenwirkend zur Reaktion gebracht wurden, um in dem oder in den Silan-Derivaten von Polysacchariden zu einer Polymerisation und/oder einer Inter-Ketten-Vernetzung zu führen, und mit einem Träger zum Bilden kovalenter Si-O-(Träger)-Verbindungen, wobei diese Träger-Materialien repräsentiert sind durch die Kombination der allgemeinen Formeln:

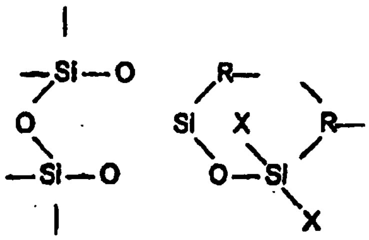

(IXaa)

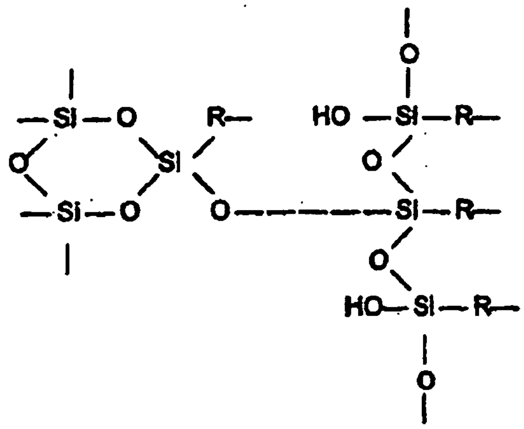

etc. (IXa)

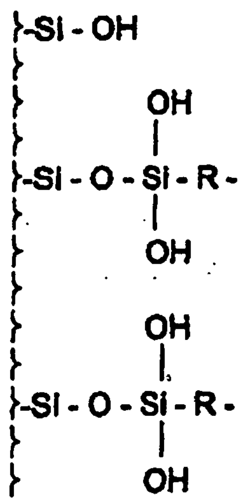

(IXbb)

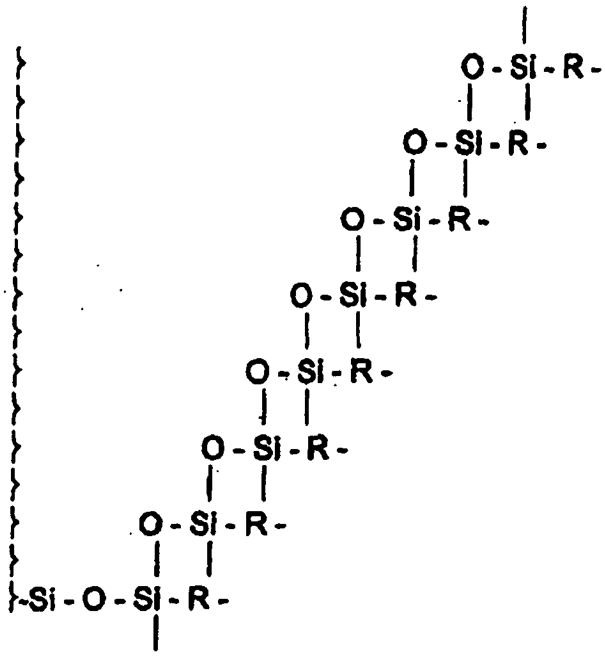

(IXb)

oder

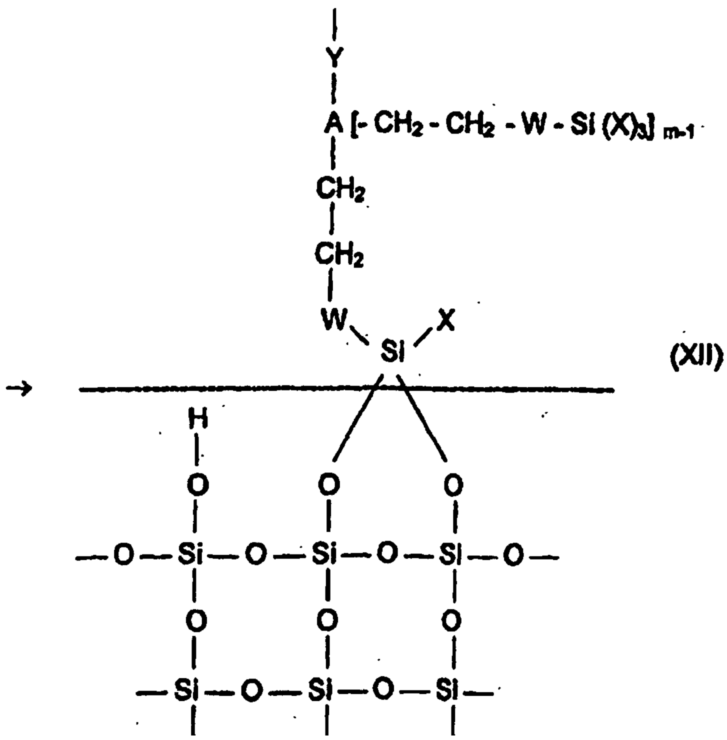

(XII)

und (IXc),(IXd),(XIII) und (XIV), wie sie im Anspruch 6 definiert sind, wobei "chirale Einheit" zu einer der in durch die allgemeine Formeln (1a) bis (1k) repräsentierten Polysaccharid-Ketten enthaltenden osidischen chiralen Einheiten korrespondiert.

**9.** Material-Träger gemäß Anspruch 8, **dadurch gekennzeichnet, dass** er repräsentiert wird durch die allgemeine Formel (IX), Kombination der Formel (XII) und der Formel (IXc) für m=1, wobei m die gleiche Bedeutung hat wie

in der Formel II:

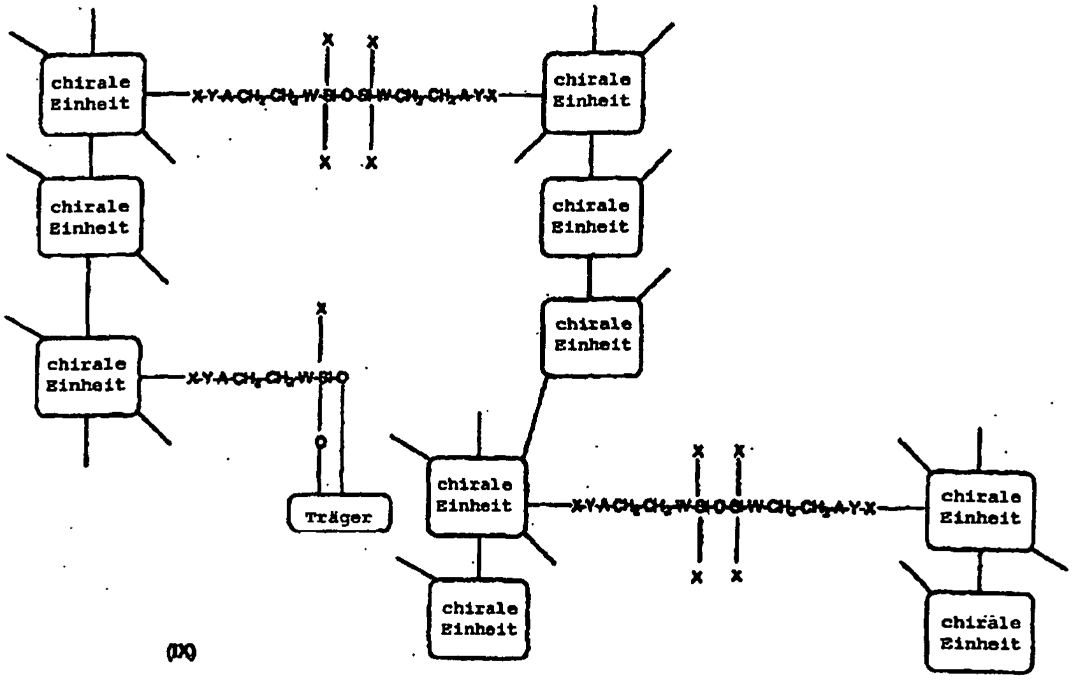

(IX)

**10.** Material-Träger gemäß einem der Ansprüche 8 und 9, **dadurch gekennzeichnet, dass** das Polysaccharid-Silan-Derivat gemäß der Formeln (1a) bis (1k), welches er enthält, in einem dreidimensionalen Netz unter Bildung von =Si-O-Si= Bindungen oder

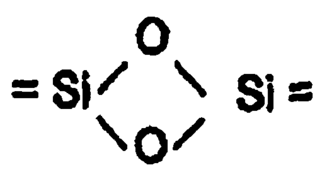

Bindungen polymerisiert oder vernetzt ist.

**11.** Material-Träger gemäß einem der Ansprüche 8 bis 10, **dadurch gekennzeichnet, dass** das Polysaccharid-Silan-Derivat gleichzeitig mit dem Träger mittels chemischer kovalenter Bindung verbunden, und in einem dreidimensionalen Netz polymerisiert oder vernetzt ist.

**12.** Material-Träger gemäß einem der Ansprüche 8 bis 11, **dadurch gekennzeichnet, dass** er wenigstens eine Verbindung der allgemeinen Formel (IXaa), (IXa), (IXbb), (IXb) oder (XII) umfasst.

**13.** Material-Träger gemäß einem der Ansprüche 8 bis 11 in Form eines dreidimensionalen Netzes, **dadurch gekennzeichnet, dass** er wenigstens eine Verbindung der allgemeinen Formel (IXc), (IXd), (XIII) oder (XIV) umfasst.

**14.** Material-Träger gemäß Anspruch 8, **dadurch gekennzeichnet, dass** der die kovalenten Bindungen tragende Träger von der folgenden allgemeinen Formel repräsentiert wird:

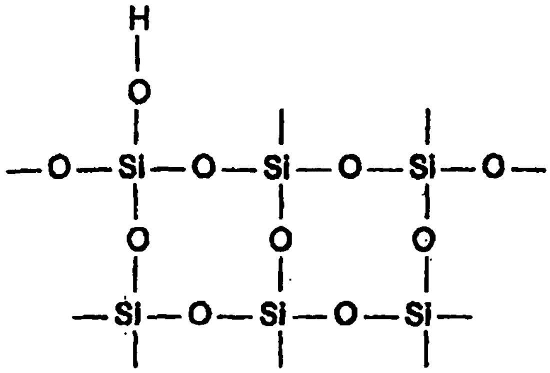

(X)

wobei Si ein Atom von Silizium, Titan, Zirkonium, Aluminium oder Magnesium repräsentiert.

**15.** Material-Träger gemäß den Ansprüchen 8 bis 14, **dadurch gekennzeichnet, dass** seine Korngröße zwischen 0,1 µm und 1 mm, und seine Porösität zwischen 0,1 $m^2/g$ und 800 $m^2/g$ umfasst ist.

**16.** Verfahren zum Gewinnen eines Träger-Materials gemäß den Ansprüchen 8 bis 15, **dadurch gekennzeichnet, dass** ein Polysaccharid-Silan-Derivat auf einem Träger aufgebracht wird, und dass anschließend dieses Polysaccharid-Silan-Derivat mit dem Träger und in begleitender Weise mit sich selbst zur Reaktion gebracht wird, um kovalente Bindungen zwischen dem Polysaccharid-Silan-Derivat und dem Träger zu bilden, und dass das Polysaccharid-Silan-Derivat und der Träger vernetzt werden, und dass das Polysaccharid-Silan-Derivat in einem dreidimensionalen Netz vernetzt wird, wobei das genannte Verfahren umfasst:

- ein physisches Depot eines Polysaccharid-Silan-Derivates der allgemeinen Formel (1a) bis (1k) auf einem durch die allgemeine Formel:

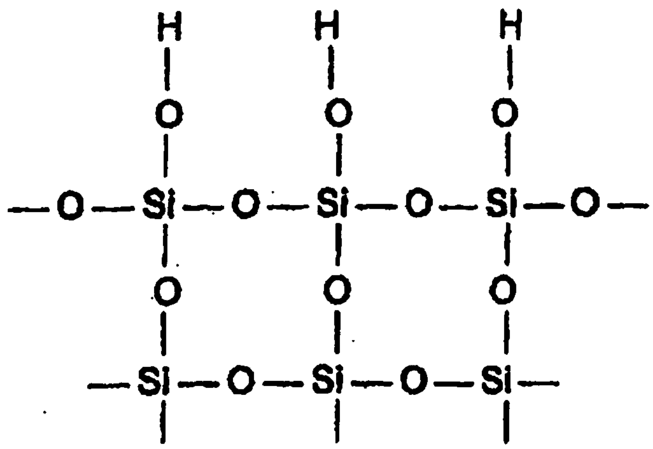

(XI)

repräsentierten Träger,

wobei Si die gleiche Bedeutung hat wie in der Formel (X); und

- das Implementieren von zwei konsistenten Reaktions-Modi in der Reaktion: mit dem Träger, der allgemeinen Formel (XI), der Silan-Radikale der allgemeinen Formel (II), um zu Verbindungen der allgemeinen Formel (IXaa),(IXa),(IXbb),(IXb) und (XII) zu gelangen:

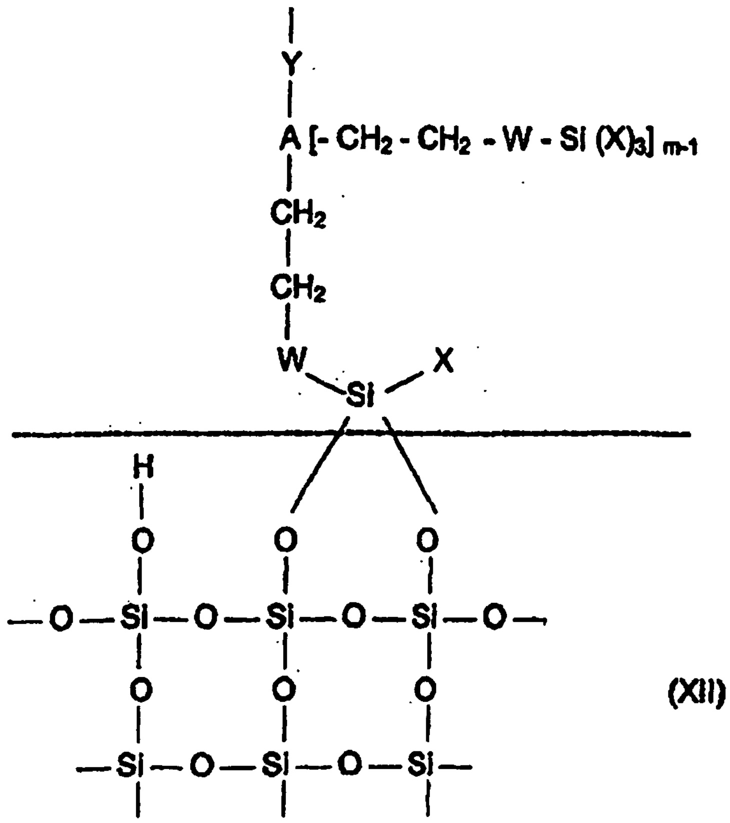

(XII)

und/oder der Reaktion der Silan-Radikale der allgemeinen Formel (II) miteinander, um zu Verbindungen der allgemeinen Formel (IXc),(IXd),(XII) und (XIV) zu gelangen.

**17.** Verwendung eines Material-Trägers gemäß einem der Ansprüche 8 bis 15 für die Präparation und die Trennung von Enantiomeren mittels Einsatz von Flüssigkeits-, Gas- oder Superkritisch-Chromatographie-Mitteln, oder Elektrophorese- oder Elektro-Chromatographie-Mitteln.

**18.** Verwendung eines Material-Trägers gemäß einem der Ansprüche 8 bis 15 in der Komposition von einer Perkolations-Membran.

## Claims

**1.** Polymerizable and cross-linkable derivative of chlorosilane, hydroxysilane or alkoxysilane type of polysaccharides or oligosaccharides, constituted by linear, branched or cyclic linkages of osidic chiral units and represented by one of the following formulae (Ia) to (Ik):

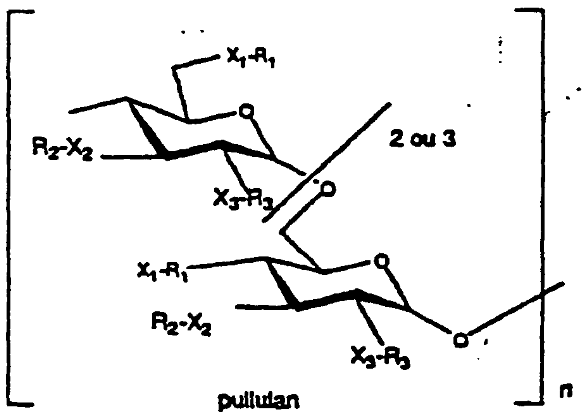

pullulan

Ia

Ib

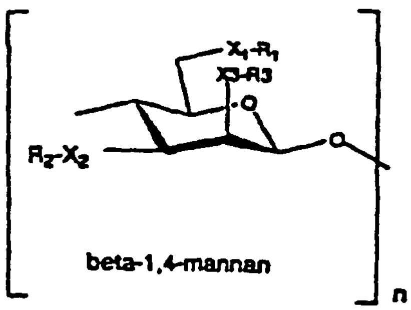

beta-1,4-mannan

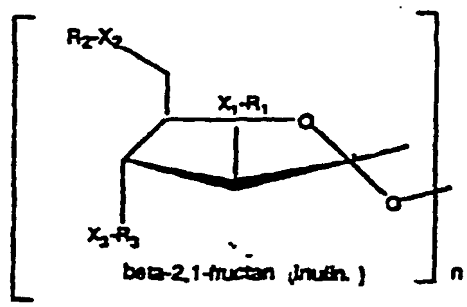

beta-2,1-fructan (inulin)

Ic

Id

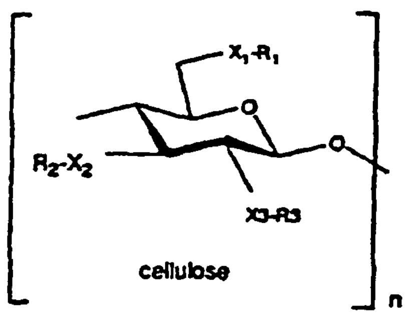

cellulose

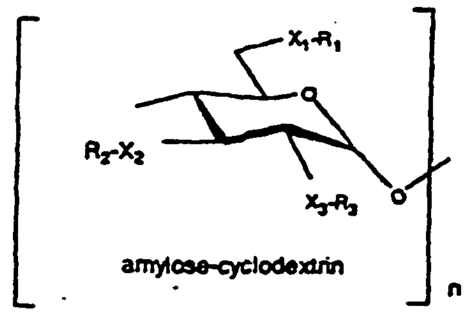

amylose-cyclodextrin

Ie

If

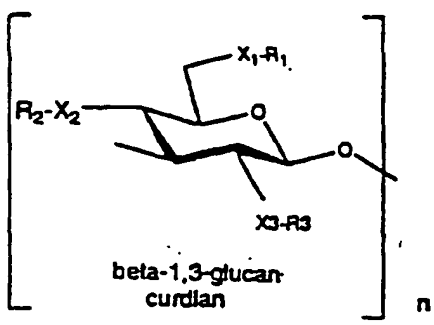

beta-1,3-glucan curdlan

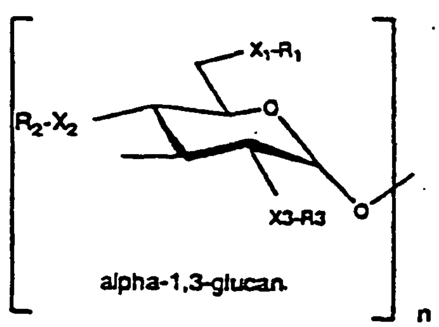

alpha-1,3-glucan

Ig

Ih 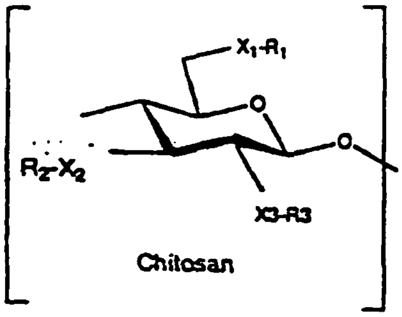
Chitosan

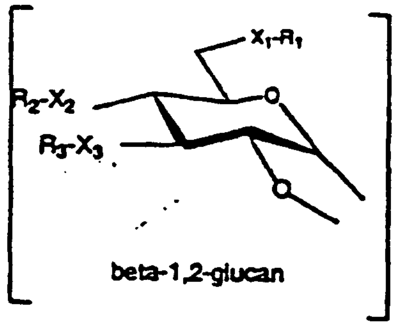 Ii
beta-1,2-glucan

Ij 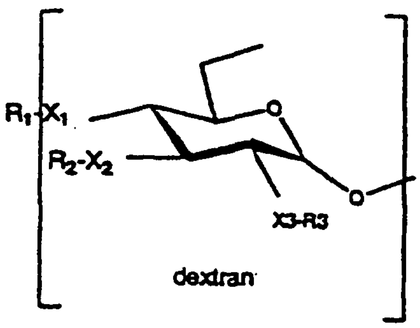
dextran

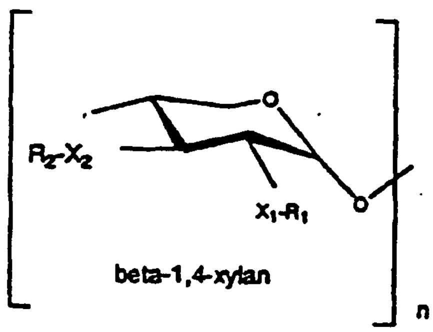 Ik
beta-1,4-xylan

in which:

a) the symbols $X_1$, $X_2$ and $X_3$, identical or different, each represent an oxygen atom or the -NH group;
b) each of the symbols $R_1$, $R_2$ and $R_3$ independently represents:

- a chlorosilane, hydroxysilane or alkoxysilane radical of general formula $[(X)_3Si\text{-}W\text{-}CH_2\text{-}CH_2]_mA\text{-}Y\text{-}$ (II) in which m is a non-zero integer at most equal to 5, Y is a single bond, an -NH-CO- group, an -NH-CS- group or a -CO- group, A represents a single bond, a linear or branched alkylene radical having 1 to 21 carbon atoms, an arylene radical having 6 to 18 carbon atoms or an aralkylene radical having 7 to 40 carbon atoms, W represents a single bond or the $-CH_2\text{-}CH_2\text{-}CH_2\text{-}S-$ group and X represents a halogen, a hydroxyl or an alkoxy;
- or a radical having the formula $A_2\text{-}A_1\text{-}CX_4\text{-}$ (III) in which $X_4$ represents an oxygen or sulphur atom, $A_1$ represents a single bond or an -NH- group and $A_2$ represents an aryl radical having from 6 to 24 carbon atoms, an aralkyl radical having from 7 to 36 carbon atoms or an alkylaryl radical having from 7 to 18 carbon atoms;
- or a hydrogen atom or an $NO_2$ group;

n being an integer between 5 and 20 000,
it being understood that, in each osidic chiral unit (Ia) to (Ik), at least one of the symbols $X_1$, $X_2$ and $X_3$ represents an oxygen atom, and that, in at least one part of the structural units constituting the polysaccharide, at least one of the symbols $R_1$, $R_2$ and $R_3$ represents a radical of general formula (II) and at least one of the symbols $R_1$, $R_2$ and $R_3$ represents a radical of general formula (III).

**2.** Silane derivative of polysaccharide according to claim 1, **characterized in that** the aryl radicals are phenyl or naphthyl radicals and/or the arylene radicals are phenylene or naphthylene radicals.

**3.** Silane derivative of polysaccharide according to claim 1 or 2 in which the arylene or aryl radicals contained respectively in the radicals of general formulae (II) and (III) are substituted by one or more atoms or radicals, identical or different, chosen from halogen atoms, alkyl radicals containing from 1 to 4 carbon atoms, alkoxy radicals containing from 1 to 4 carbon atoms and nitro groups.

**4.** Silane derivative of polysaccharide according to one of claims 1 to 3, **characterized in that** the degree of polymerization is between 5 and 20 000.

5. Silane derivative of polysaccharide according to one of claims 1 to 4, **characterized in that** it contains from 0.05 to 2.95 groups of general formula (II) per structural unit and from 0.05 to 2.95 groups of general formula (III) per osidic chiral unit.

6. Cross-linked compound originating from a derivative according to any one of claims 1 to 6 **characterized in that** it is represented by one of general formulae (IXc), (IXd), (XIII) and (XIV):

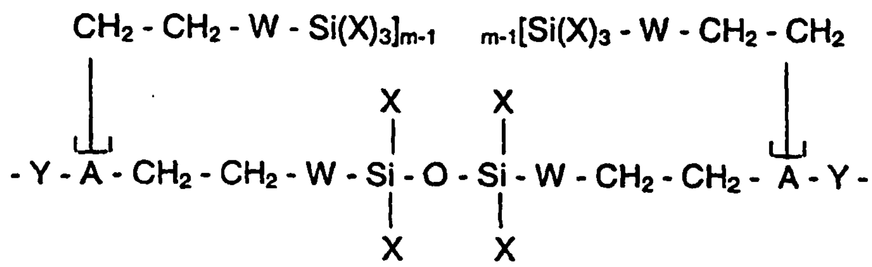

(XIII)

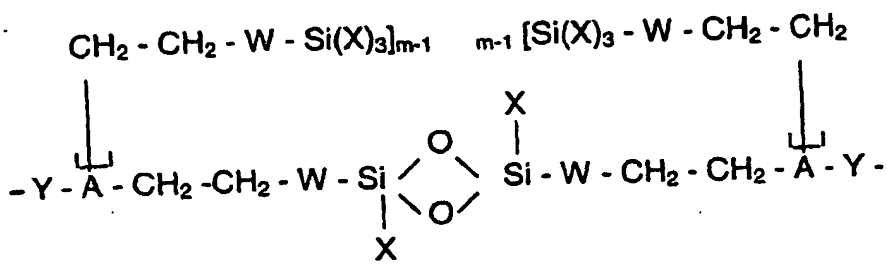

(XIV)

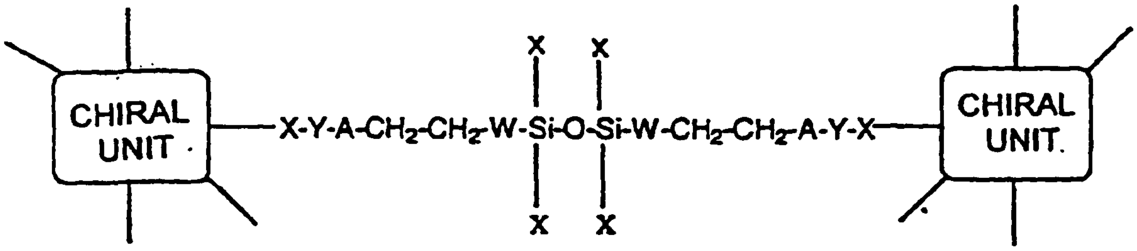

or

(IXc)

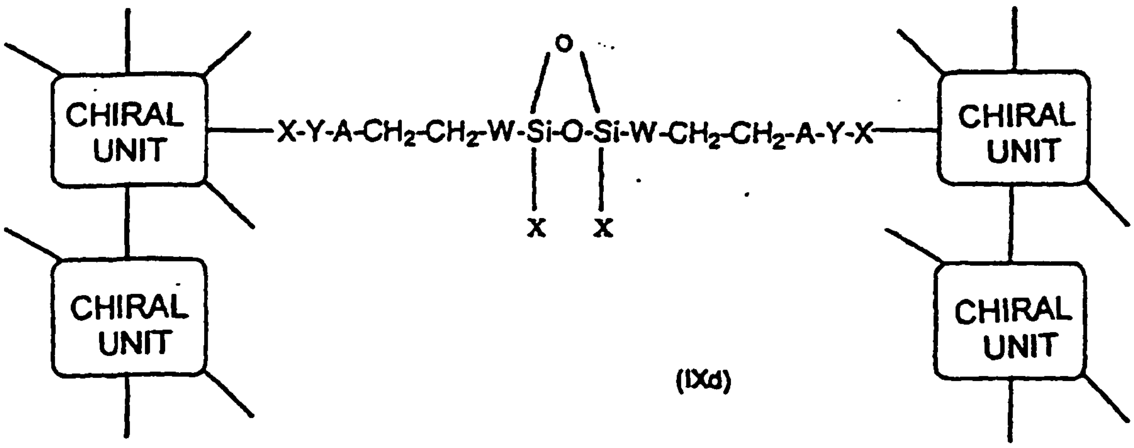

(IXd)

formula (IXc) corresponds to formula (XIII) for m= 1.
formula (IXd) corresponds to formula (XIV) for m= 1,
and Y, A, W, X and m having the same meaning as in formula (II).

**7.** Method for preparing a silane derivative of polysaccharide according to one of claims 1 to 5 **characterized in that** the following steps are reacted on a polysaccharide:

- in stage 1, a product of general formula $(CH_2=CH)_mA-Y_1$ (IV) in which A is defined as in claim 1 and $Y_1$ represents a halogen atom, an -N=C=O or -N=C=S or a -CO-Z-residue in which Z represents a halogen atom in order to introduce an ethylene radical which will be subsequently transformed in stage 3;
- in an optional stage 2, an isocyanate or an isothiocyanate of general formula $A_2$-$A_1$-N=C=X (V) in which $A_2$ is defined as in claim 1 and X represents an oxygen or sulphur atom or a product of general formula $A_2$-$A_1$-CO-$Z_1$ (VI) in which $A_2$ and $A_1$ are defined as in claim 1 and $Z_1$ represents a halogen atom in order to introduce a radical of general formula (III); and
- in stage 3, a product of general formula:

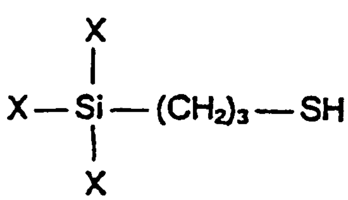

or

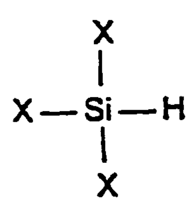

(VII)

(VIII)

in which X is defined as in claim 1 in order to introduce a radical of general formula (II).

8. Support material **characterized in that** it contains a silane derivative or silane derivatives of polysaccharides of general formula (Ia) to (Ik) according to one of claims 1 to 5, and of which the chlorosilane, hydroxysilane or alkoxysilane radicals of general formula (II) are reacted, concomitantly, between themselves, in order to lead to a polymerization and/or an interchain cross-linking in the silane derivative or derivatives of polysaccharides, and with a support for the creation of covalent bonds -Si-O-(Support)-, said support materials being represented by the combination of general formulae

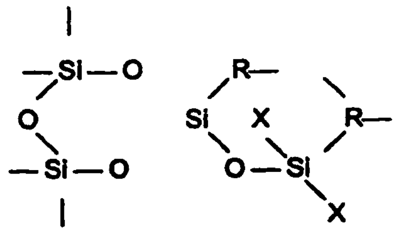

(IXaa)

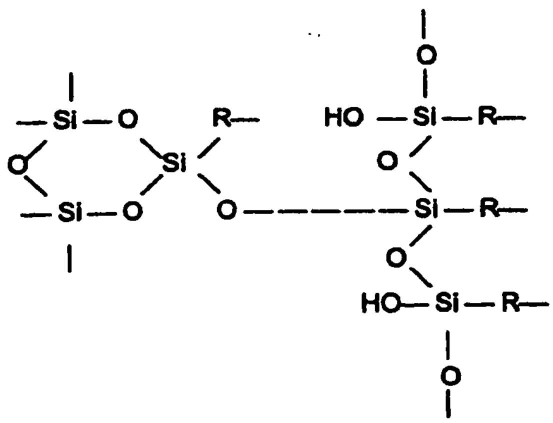

etc. (IXa)

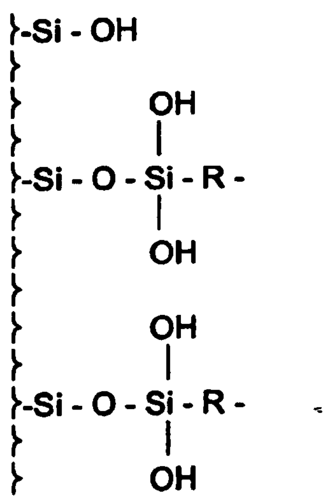

(IXbb)

and (IXc), (IXd), (XIII) and (XIV), defined in claim 6,
where "chiral unit" corresponds to one of the osidic chiral units contained in the polysaccharide linkage represented by general formulae (Ia) to (Ik).

**9.** Support material according to claim 8 **characterized in that** it is represented by general formula (IX), combination of formula (XII) and formula (IXc) for m = 1, m having the same meaning as in formula (II):

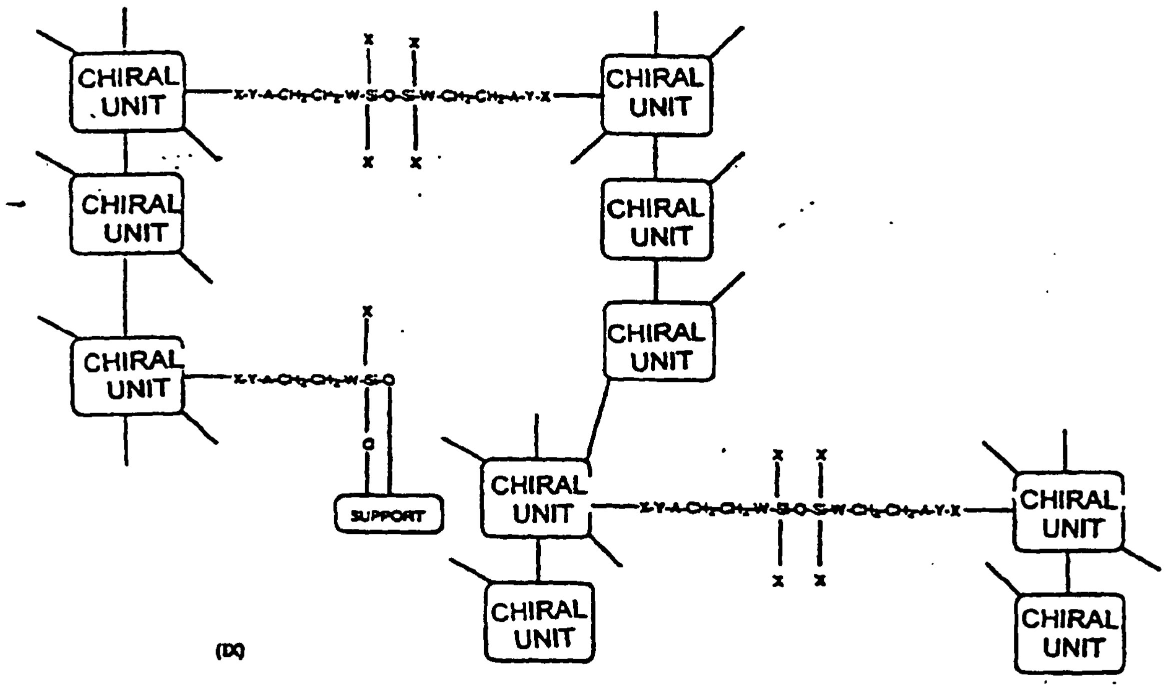

(IX)

**10.** Support material according to one of claims 8 and 9 **characterized in that** the silane derivative of polysaccharide of formulae (Ia) to (Ik) is polymerized or cross-linked in a three-dimensional network by the formation of the following bonds: ≡Si-O-Si≡ or

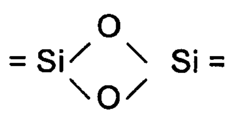

**11.** Support material according to one of claims 8 to 10 **characterized in that** the silane derivative of polysaccharide is both bound to the support by a chemical covalent bond and polymerized or cross-linked in a three-dimensional network.

**12.** Support material according to one of claims 8 to 11 **characterized in that** it contains at least one compound of general formula (IXaa), (IXa), (IXbb), (IXb) or (XII).

**13.** Support material according to one of claims 8 to 11 in the form of a three-dimensional network **characterized in that** it contains at least one compound of general formula (IXc), (IXd) (XIII) or (XIV).

**14.** Support material according to claim 8 **characterized in that** the support carrying covalent bonds is represented by the following general formula:

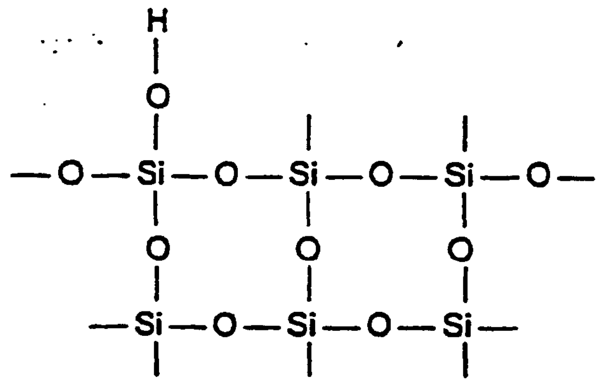

(X)

where Si represents the silicon, titanium, zirconium, aluminium or-magnesium atom.

**15.** Support material according to claims 8 to 14 **characterized in that** its granulometry is between 0.1 µm and 1 mm and its porosity between 0.1 $m^2/g$ and 800 $m^2/g$.

**16.** Method for obtaining a support material according to claims 8 to 15 **characterized in that** a silane derivative of polysaccharide is deposited on a support and then said silane derivative of polysaccharide is reacted with the support and in a concomitant fashion with itself in order to create covalent bonds between the silane derivative of polysaccharide and the support and to cross-link the silane derivative of polysaccharide and the support and to cross-link the silane derivative of polysaccharide in a three-dimensional network, said method comprising:

- physically depositing a silane derivative of polysaccharide of general formula (Ia) to (Ik) on a support of general formula:

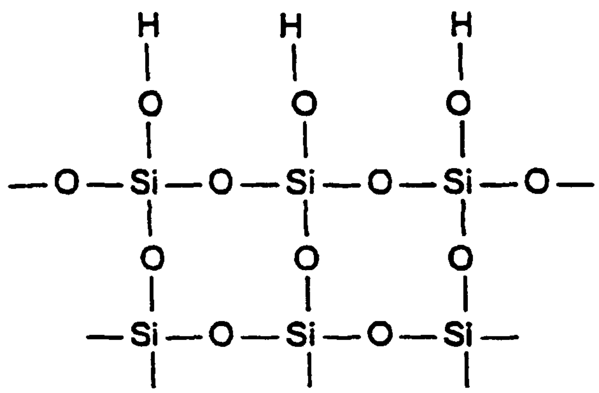

(XI)

where Si has the same meaning as in formula (X): and

- implementing two reaction methods consisting of:

  * reaction of the silane radicals of general formula (II) with the support, of general formula (XI), to give the compounds of general formula (IXaa), (IXa), (IXbb), (IXb), and (XII):

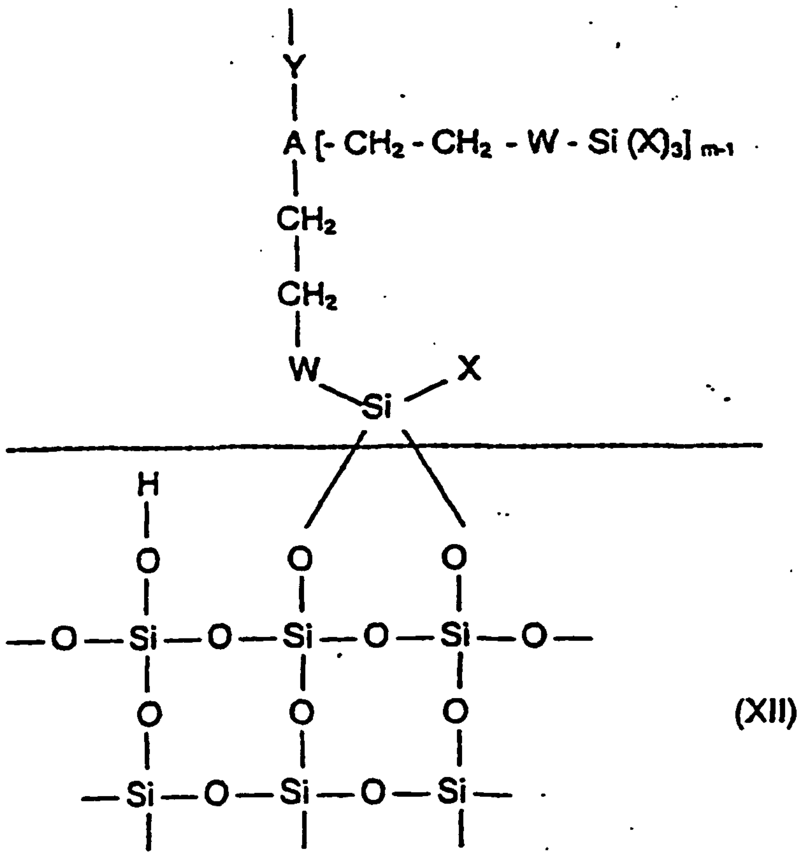

(XII)

* and/or reaction of the silane radicals of general formula (II) on themselves in order to give compounds of general formula (IXc), (IXd), (XII) and (XIV).

**17.** Use of a support material according to one of claims 8 to 15 for the preparation and separation of enantiomers employing means of liquid or gaseous or supercritical chromatography, or means of electrophoresis or electrochromatography.

**18.** Use of a support material according to one of claims 8 to 15 in the composition of a percolation membrane.